(19) **Europäisches Patentamt / European Patent Office / Office européen des brevets**

(11) **EP 4 671 842 A1**

(12) **EUROPEAN PATENT APPLICATION**
published in accordance with Art. 153(4) EPC

(43) Date of publication:
**31.12.2025 Bulletin 2026/01**

(21) Application number: **24775153.0**

(22) Date of filing: **18.03.2024**

(51) International Patent Classification (IPC):
**G02B 13/00** (2006.01)  **G02B 9/60** (2006.01)
**H04N 23/55** (2023.01)  **G03B 9/02** (2021.01)
**G02B 3/00** (2006.01)

(52) Cooperative Patent Classification (CPC):
**G02B 3/00; G02B 9/60; G02B 13/00; G03B 9/02; H04N 23/55**

(86) International application number:
**PCT/KR2024/003356**

(87) International publication number:
**WO 2024/196105 (26.09.2024 Gazette 2024/39)**

(84) Designated Contracting States:
**AL AT BE BG CH CY CZ DE DK EE ES FI FR GB GR HR HU IE IS IT LI LT LU LV MC ME MK MT NL NO PL PT RO RS SE SI SK SM TR**
Designated Extension States:
**BA**
Designated Validation States:
**GE KH MA MD TN**

(30) Priority: **17.03.2023 KR 20230035314**
**05.04.2023 KR 20230044967**

(71) Applicant: **SAMSUNG ELECTRONICS CO., LTD.**
**Yeongtong-gu**
**Suwon-si, Gyeonggi-do 16677 (KR)**

(72) Inventors:
• **KIM, Dongwoo**
**Suwon-si Gyeonggi-do 16677 (KR)**
• **BAE, Jaecheol**
**Suwon-si Gyeonggi-do 16677 (KR)**

(74) Representative: **HGF**
**HGF Limited**
**4th Floor, 1 City Square**
**Leeds LS1 2AL (GB)**

(54) **LENS ASSEMBLY AND ELECTRONIC DEVICE COMPRISING SAME**

(57) An electronic device may be provided according to various embodiments of the present disclosure, the electronic device comprising: a lens assembly having a plurality of lenses aligned along an optical axis in the direction from an object side to an image side, the lens assembly comprising a first lens having a positive refractive power, a second lens having a negative refractive power, a third lens having a positive refractive power, a fourth lens having a negative refractive power, and a fifth lens; and an image sensor (IS) comprising an imaging plane (img) on which an image is formed. The electronic device may be implemented as a compact and high-resolution optical device. The lens assembly as described above may vary according to the embodiment, and a lens assembly and an electronic device comprising same, according to the other various embodiments, may also be provided.

FIG. 1

**Description**

[Technical Field]

Various embodiments of the disclosure relate to, for example, a lens assembly which may be mounted in a small electronic device such as a portable terminal or a wearable device. Further, various embodiments of the disclosure relate to a lens assembly having high pixel performance and an electronic device including the same.

[Background Art]

Optical devices, for example, cameras capable of capturing images or videos have been widely used. Although film-type optical devices were the mainstay of the past, digital cameras or video cameras with solid-state image sensors such as charge coupled devices (CCDs) or complementary metal-oxide semiconductors (CMOS) have become common in recent years. Optical devices with solid-state image sensors (CCDs or CMOSs) have been gradually replacing film-based optical devices, because they allow for easier storage, duplication, and movement of images than the film-based optical devices.
To obtain high-quality images and/or videos, an optical device may include an optical system including a lens assembly with a plurality of lenses and an image sensor having a high pixel count. The lens assembly may have, for example, a low F-number (Fno) and a low aberration, thereby enabling acquisition of high-quality (high-resolving power) images and/or videos. To achieve a low F-number (Fno) and a low aberration, in other words, to obtain high-resolution and bright images, it is necessary to combine multiple lenses. As the image sensor includes more pixels, its pixel count increases, and an image sensor with a higher pixel count may obtain higher-resolution images and/or videos. As cameras for portable terminals or wearable devices are recently required to have a large number of pixels, the size of image sensors is gradually increasing, which may lead to an increase in the size of electronic devices. A plurality of very small pixels, for example, micrometer-scale pixels may be arranged to implement a high-pixel image sensor in a limited mounting space within an electronic device. An image sensor including tens of millions to hundreds of millions of micrometer-scale pixels is now mounted even in a portable electronic device such as a smartphone or a tablet.
This optical device becomes an integral component of electronic devices that provide a variety of services and additional functions, and high-performance optical devices may entice users to purchase electronic devices.

[Detailed Description of the Invention]

[Technical Solution]

According to embodiments of the disclosure, an electronic device may be provided, including a lens assembly in which a plurality of lenses are aligned along an optical axis direction from an object side toward an image side, the lens assembly including a first lens having a positive refractive power, a second lens having a negative refractive power, a third lens having a positive refractive power, a fourth lens having a negative refractive power, and a fifth lens having a positive refractive power, and an image sensor including an imaging plane on which an image is formed. The lens assembly may satisfy the following [Equation 1] and [Equation 2].

$$[\text{Equation 1}]$$

$$2.45 \leq \frac{vd_3 + vd_4}{vd_2} \leq 3.45$$

$$[\text{Equation 2}]$$

$$70 \leq FoV \leq 90$$

(where Vd2 is an Abbe number of the second lens, Vd3 is an Abbe number of the third lens, and Vd4 is an Abbe number of the fourth lens in [Equation 1], and FoV is a field of view of an entire optical system in [Equation 2]).
According to embodiments of the disclosure, an electronic device may be provided, including a lens assembly in which a plurality of lenses are aligned along an optical axis direction from an object side toward an image side, the lens assembly including a first lens having a positive refractive power in a meniscus shape with a convex surface toward the object side, a second lens having a negative refractive power, a third lens having a positive refractive power in a meniscus shape with a convex surface toward the image side, a fourth lens having a negative refractive power in a meniscus shape with a convex surface toward the object side, and a fifth lens having a positive refractive power in a meniscus shape with a convex surface toward the object side, and an image sensor including an imaging plane on which an image is formed. The lens assembly may satisfy the following [Equation 1] and [Equation 2].

[Equation 1]

$$2.45 \le \frac{vd_3 + vd_4}{vd_2} \le 3.45$$

[Equation 2]

70 degrees ≦ FOV ≦ 90 degrees

(where Vd2 is an Abbe number of the second lens, Vd3 is an Abbe number of the third lens, and Vd4 is an Abbe number of the fourth lens in [Equation 1], and FoV is a field of view of an entire optical system in [Equation 2]).

[Brief Description of Drawings]

FIG. 1 is a diagram illustrating the configuration of a lens assembly according to an embodiment.

FIG. 2 is a graph illustrating spherical aberration of the lens assembly according to the embodiment of FIG. 1.

FIG. 3 is a graph illustrating astigmatism of the lens assembly according to the embodiment of FIG. 1.

FIG. 4 is a graph illustrating distortion of the lens assembly according to the embodiment of FIG. 1.

FIG. 5 is a diagram illustrating the configuration of a lens assembly according to an embodiment.

FIG. 6 is a graph illustrating spherical aberration of the lens assembly according to the embodiment of FIG. 5.

FIG. 7 is a graph illustrating astigmatism of the lens assembly according to the embodiment of FIG. 5.

FIG. 8 is a graph illustrating distortion of the lens assembly according to the embodiment of FIG. 5.

FIG. 9 is a diagram illustrating the configuration of a lens assembly according to an embodiment.

FIG. 10 is a graph illustrating spherical aberration of the lens assembly according to the embodiment of FIG. 9.

FIG. 11 is a graph illustrating astigmatism of the lens assembly according to the embodiment of FIG. 9.

FIG. 12 is a graph illustrating distortion of the lens assembly according to the embodiment of FIG. 9.

FIG. 13 is a diagram illustrating the configuration of a lens assembly according to an embodiment.

FIG. 14 is a graph illustrating spherical aberration of the lens assembly according to the embodiment of FIG. 13.

FIG. 15 is a graph illustrating astigmatism of the lens assembly according to the embodiment of FIG. 13.

FIG. 16 is a graph illustrating distortion of the lens assembly according to the embodiment of FIG. 13.

FIG. 17 is a diagram illustrating the configuration of a lens assembly according to an embodiment.

FIG. 18 is a graph illustrating spherical aberration of the lens assembly according to the embodiment of FIG. 17.

FIG. 19 is a graph illustrating astigmatism of the lens assembly according to the embodiment of FIG. 17.

FIG. 20 is a graph illustrating distortion of the lens assembly according to the embodiment of FIG. 17.

FIG. 21 is a block diagram illustrating an electronic device in a network environment according to various embodiments.

FIG. 22 is a block diagram illustrating a camera module according to various embodiments.

[Mode for Carrying out the Invention]

A conventionally known optical system including a lens assembly with five lenses and an image sensor has a long optical whole length (the distance from the vertex of an object-side surface of the first lens on an object side to the image sensor) relative to an image height (IMG HT) (half of the diagonal length of the image sensor), and may have difficulty in correcting chromatic aberration or controlling aberration due to a low refractive index.

Various embodiments of the disclosure may be applied to a high-pixel image sensor in an optical system including a lens assembly with five lenses and an image sensor, and provide a lens assembly and an electronic device which may be designed to have a minimum optical whole length relative to an image height.

Various embodiments of the disclosure will be described below with reference to the accompanying drawings.

An electronic device according to various embodiments of the disclosure may include at least one of, for example, a smartphone, a tablet PC, a mobile phone, a video phone, an e-book reader, a desktop PC, a laptop PC, a netbook computer, a workstation, a server, a PDA, a portable multimedia player (PMP), an MP3 player, a medical device, a camera, or a wearable device. The wearable device may include at least one of an accessory type (e.g., a watch, a ring, a bracelet, an anklet, a necklace, eyeglasses, contact lenses, or a head-mounted-device (HMD)), a fabric or clothing-integrated type (e.g., electronic clothing), a body-attached type (e.g., a skin pad or a tattoo), or bio-implantable circuitry. In embodiments, the electronic device may include at least one of, for example, a television, a digital video disk (DVD) player, an audio device, a refrigerator, an air conditioner, a vacuum cleaner, an oven, a microwave oven, a washing machine, an air purifier, a set-top box, a home automation control panel, a security control panel, a media box (e.g., Samsung HomeSync™, Apple TV™, or Google TV™), a game console (e.g., Xbox™ or PlayStation™), an electronic dictionary, an electronic key, a camcorder, or an electronic photo frame. In various embodiments, the electronic device may be flexible, or a combination of two or more of the various devices described above. The electronic device according to various embodiments of the disclosure is not limited to the devices described above. In various embodiments of the disclosure, the term user may refer to a person using an electronic device or a device (e.g., an artificial intelligence electronic device) using an electronic device. The electronic device according to an embodiment of the disclosure is not limited to the devices described above.

According to various embodiments, a representative example of the electronic device may include an optical device (e.g., a camera module), and the following description may be based on the assumption that a lens assembly is mounted in an optical device, as an embodiment.

In describing various embodiments of the disclosure, some numerical values and the like may be presented, but it should be noted that these numerical values do not limit various embodiments of the disclosure, unless stated in the claims.

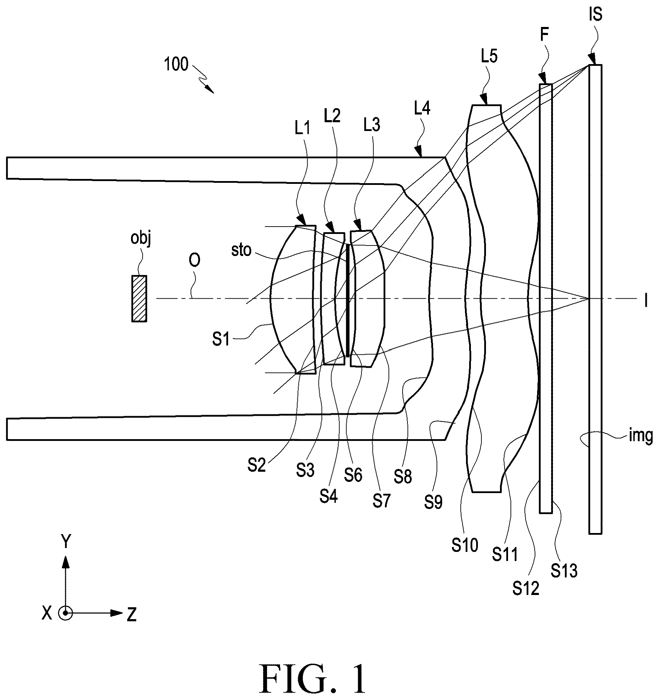

FIG. 1 is a block diagram illustrating a lens assembly 100 according to an embodiment.

Referring to FIG. 1, the lens assembly 100 may include a plurality of lenses (e.g., L1, L2, L3, L4, and L5) and an image sensor IS.

According to an embodiment, the image sensor IS may be mounted in an electronic device. The lens assembly 100 including the plurality of lenses (e.g., L1, L2, L3, L4, and L5) may be mounted in the optical device and/or electronic device with the image sensor IS mounted therein. For example, in describing various embodiments of the disclosure, an example will be described in which the image sensor IS is provided in the lens assembly 100. However, the image sensor IS may be mounted and used in the optical device and/or the electronic device in which the lens assembly 100 is mounted.

According to an embodiment, the image sensor IS, which is a sensor mounted on a circuit board (not shown) or the like and disposed in alignment with an optical axis O-I, may be responsive to light. The image sensor IS may include, for example, a sensor such as a complementary metal-oxide semiconductor (CMOS) image sensor or a charge coupled device (CCD). The image sensor IS may include, but is not limited to, for example, various elements that convert an image of an object into an electrical image signal. The image sensor IS may obtain an image of an object obj by detecting contrast information, contrast ratio information, and/or color information about the object obj from light passing through the plurality of lenses (e.g., L1, L2, L3, L4, and L5).

According to an embodiment, the plurality of lenses (e.g., L1, L2, L3, L4, and L5) included in the lens assembly 100 may include at least one synthetic resin lens, and the lens assembly 100 may have a field of view of approximately 80 degrees by a combination of the lenses. For example, the lens assembly 100 may have a field of view greater than 70 degrees and less than 90 degrees. Further, the image sensor IS, which has an image height of approximately 4.0mm or greater, may be formed such that tens of millions to hundreds of millions of pixels are arranged. For example, an image sensor having an image height equal to or greater than approximately 4.0mm and less than approximately 5.0mm may be applied as the image sensor IS of the disclosure. For reference, the term image height as used herein may refer to half of the diagonal length of an image sensor which has the optical axis O-I as its normal and is substantially rectangular (e.g., square) and thin.

According to an embodiment, the lens assembly 100 may have the optical axis O-I from an object (or subject) side O to an image side I. In FIG. 1, a directional component X (or X axis), a directional component Y (or Y axis), and a directional component Z (or Z axis) are illustrated. The directional component X (or X axis), the directional component Y (or Y axis), and the directional component Z (or Z axis) in FIG. 1 may represent mutually orthogonal coordinate axes. In the following description, the optical axis O-I may be substantially parallel to the directional component Z. In the following embodiments, the overall length of the lens assembly 100 may be parallel to the directional component Z, and an imaging plane img of the image sensor IS may be parallel to an imaginary plane formed by the directional component X and the directional component Y. In describing the configuration of each lens below, for example, the object side may indicate a direction in which the object obj is located, and the image side may indicate a direction in which the imaging plane img with an image formed thereon is located. Further, a "surface facing the object side" of a lens is, for example, a surface on the side of the object obj with respect to the optical axis O-I, and may refer to a left surface (or front surface) of the lens in the drawings according to various embodiments of the disclosure. A "surface facing the image side" is a surface on the side of the imaging plane img with respect to the optical axis O-I, and may refer to a right surface (or rear surface) of the lens in the drawings. Herein, the imaging plane img may be, for example, a portion where a capturing device or the image sensor IS is disposed and thus an image is formed.

According to an embodiment, with respect to at least one of the plurality of lenses included in the lens assembly 100, viewing the object side O along the optical axis O-I may be defined as facing a first direction, and viewing the image side I along the optical axis O-I may be defined as facing a second direction. When a certain lens (e.g., a first lens L1) includes a surface facing the object side O, the surface facing the object side O may be considered to face the first direction. Further, when a certain lens (e.g., the first lens L1) includes a surface facing the image side I, the surface facing the image side I may be considered to face the second direction. The first direction and the second direction may be parallel to the directional component Z in FIG. 1.

Referring to FIG. 1, the lens assembly 100 according to an embodiment may include a plurality of lenses (e.g., L1, L2, L3, L4, and L5) sequentially arranged along the direction of the optical axis O-I (e.g., the direction from the object side O to the image side I in FIG. 1), including the first lens L1, the second lens L2, the third lens L3, the fourth lens L4, and the fifth lens L5. The plurality of lenses (e.g., L1, L2, L3, L4, and L5) may be disposed in alignment with the image sensor IS on the optical axis.

According to embodiments, in describing the plurality of lenses (e.g., L1, L2, L3, L4, and L5), a portion of each lens close to the optical axis O-I may be referred to as a 'chief portion', and a portion of the lens far from the optical axis O-I (or a portion close to an edge of the lens) may be referred to as a 'marginal portion'. The chief portion may be, for example, a portion where the first lens L1 intersects the optical axis O-I. The marginal portion may be, for example, a portion of the first lens L1 spaced apart from the optical axis by a predetermined distance. The marginal portion may include, for example, an end portion of the lens farthest from the optical axis O-I of the lens.

According to an embodiment, to configure a small optical device, the first lens L1 included in the lens assembly 100 may have a positive refractive power, and the second lens L2 may have a negative refractive power. Further, the third lens L3 may have a positive refractive power, and the fourth lens L4 may have a negative refractive power. Further, the fifth lens L5 may have a positive refractive power. In the above-described embodiments, when light parallel to the optical axis O-I is incident on a lens having a positive refractive power, the light passing through the lens may be focused. For example, the lens having the positive refractive power may be based on the principle of a convex lens. Conversely, when parallel light is incident on a lens having a negative refractive power, the light passing through the lens may be dispersed. For example, the lens having the negative refractive power may be based on the principle of a concave lens.

According to an embodiment, the first lens L1 may be formed as a meniscus lens having a convex surface S1 facing the object side O. The second lens L2 may be formed as a meniscus lens having a convex surface S3 facing the object side O. The third lens L3 may be formed as a meniscus lens having a convex surface S7 facing the image side I. The fourth lens L4 may have a meniscus shape that is convex towards the object side O in a chief portion close to the optical axis O-I, and the fifth lens L5 may also have a meniscus shape that is convex towards the object side O in a chief portion close to the optical axis O-I.

According to an embodiment, all the five lenses included in the lens assembly 100 may be configured as lenses made of a synthetic resin material (e.g., a plastic material). The lens assembly 100 may be miniaturized and lightweight by configuring all the lenses included in the lens assembly 100 as synthetic resin lenses.

According to an embodiment, the overall length of the lens assembly 100 and the outer diameter of a head portion of the lens assembly may be reduced by configuring the first lens L1 as a meniscus lens convex towards the object side O and having a positive refractive power. Further, a surface S2 of the first lens L1 facing the image side I may have an inflection shape in which a chief portion close to the optical axis is concave towards the image side, and a marginal portion spaced apart from the optical axis by a predetermined distance is convex towards the image side. This configuration may be advantageous for reducing the overall length of the optical system and facilitate the correction of spherical aberration due to the inflection shape of the marginal portion.

According to an embodiment, the third lens L3 may have a shape substantially symmetrical to the first lens L1 with respect to an imaginary plane perpendicular to the optical axis O-I between the first lens L1 and the third lens L3. As the third lens L3 is disposed to be symmetrical to the first lens L1, the overall optical system may be miniaturized, and correction of curvature of field for an image formed on the marginal portion of the image sensor may be facilitated.

According to an embodiment, both a surface S8 of the fourth lens L4 facing the object side and a surface S9 of the fourth lens L4 facing the image side may have an inflection shape in which a marginal portion is convex towards the image side. Since the fourth lens L4 has an inflection shape in which the curvature directions of the chief portion and the marginal portion with respect to the optical axis are different, correction of curvature of field of the marginal portion may be facilitated, while preventing the angle of light rays entering the image sensor from increasing.

According to an embodiment, the fifth lens L5 may have at least one inflection shape on each of both a surface S10 facing the object and a surface S11 facing the image side. For example, an object-side surface S10 of the fifth lens L5 may have two inflection shapes in which the marginal portion is convex towards the image side and also convex towards the object side. In another example, an image-side surface S11 of the fifth lens L5 may have one inflection shape in which the chief portion is concave towards the image side and the marginal portion is convex towards the image side. Since the fifth lens L5 has an inflection shape in which the curvature directions of the chief portion and the marginal portion with respect to the optical axis are different, correction of curvature of field of the marginal portion may be facilitated while preventing the angle of light rays entering the image sensor from increasing. The lens assembly may become compact and advantageous for controlling aberration of the marginal portion by applying the same inflection shape to both the fourth lens L4 and the fifth lens L5, thereby ensuring high performance even when a high-pixel image sensor is applied.

According to embodiments, the first lens L1, the second lens L2, and the third lens L3 may be configured as small-diameter lenses with relatively small effective diameters in the 5-lens lens assembly. Herein, an 'effective diameter' may refer to an actual area through which light rays pass on one surface of a lens, excluding a flange (rib). The length of the effective diameter may refer to the distance between one end and the other end of the lens in a direction perpendicular to the optical axis O-I. Since lenses should be installed within a limited space in an optical device and/or an electronic device, implementing the first lens L1, the second lens L2, and the third lens L3 as small-diameter lenses, while configuring the first lens L1 as a lens with a positive refractive power, the second lens L2 as a lens with a negative refractive power, and the third lens L3 as a lens with a positive refractive power, may have the effect of reducing the overall length of the optical system. Further, according to an embodiment, the outer diameters of the lenses may be minimized by disposing an aperture stop sto that determines the F-number (F/no) of the overall optical system between the second lens L2 and the third lens L3.

According to various embodiments, at least one of the surfaces S1, S2, S3, and S4 of the first lens L1 and the second lens L2 may be formed as an aspheric surface. Spherical aberration that may occur in the first lens L1 and the second lens L2 may be prevented by implementing at least one of the surfaces S1, S2, S3, and S4 of the first lens L1 and the second lens L2 as an aspheric surface. In various embodiments described below, an example may be provided in which at least one surface of the first lens L1, the second lens L2, the third lens L3, the fourth lens L4, and the fifth lens L5 is implemented as an aspheric surface. Herein, the respective surfaces S1 and S2 of the first lens L1, the respective surfaces S3 and S4 of the second lens L2, and the respective surfaces S10 and S11 of the fifth lens L5 may be formed to have different curvatures.

According to various embodiments, the radius of curvature, thickness, total track length (TTL), focal length, and the like of a lens of the disclosure may all be in units of millimeters (mm), unless otherwise specified. Further, the thickness of a lens, the distance between lenses, and a TTL (or overall length (OAL)) may be distances measured along the optical axis of the lenses. Additionally, in the description of the shape of a lens, when it is said that one surface has a convex shape, this may mean that an optical axis portion of the surface is convex, and when it is said that one surface has a concave shape, this may mean that an optical axis portion of the surface is concave. Even if it is described that one surface (the optical axis portion of the surface) of a lens has a convex shape, an edge portion of the lens (a portion spaced apart from the optical axis portion of the surface) by a predetermined distance) may be concave. Similarly, even if it is described that one surface (the optical axis portion of the surface) of a lens has a concave shape, an edge portion of the lens (a portion spaced apart from the optical axis portion of the surface by a predetermined distance) may be convex. Further, in the following detailed description and claims, the term inflection point may refer to a point where the radius of curvature changes in a portion that does not intersect the optical axis. The inflection point may be located at a point where one surface of the lens changes from a convex shape to a concave shape, or from a concave shape to a convex shape. According to various embodiments, the surface S8 of the fourth lens L4 facing the object side O may have two inflection shapes in a marginal portion, and the surface S9 of the fourth lens L4 facing the image side I may have one inflection shape in a marginal portion.

According to an embodiment, the lens assembly 100 may be configured with five lenses having positive, negative, positive, negative, and positive refractive powers in order from the object side, and one filter F (e.g., an IR filter). Accordingly, performance with a field of view of approximately 80 degrees and up to an image height of 4.0mm to 5.0mm may be secured, thereby providing an optical system to which a high-pixel sensor is applicable. Since the optical device (e.g., camera module) may be implemented in a small size through the minimum configuration of five lenses despite application of a high-pixel sensor, the size increase of a portable electronic device in which the optical device (e.g., camera module) is mounted may be minimized.

According to various embodiments, the lens assembly 100 may be implemented with lenses made of, for example, synthetic resin (e.g., plastic), each having a predetermined refractive index. The plurality of lenses may be manufactured of a synthetic resin material, which may increase the degree of freedom in size and shape design. For example, regarding refractive indexes at a specific wavelength (e.g., 587.5600nm) of visible light, when the first lens L1 is formed as a synthetic resin lens having a refractive index of 1.55 or less, and the second lens L2 is formed as a synthetic resin lens having a refractive index of 1.66 or more, the third lens L3 and the fourth lens L4 may be formed to have refractive indexes lower than the refractive index of the second lens L2. For example, the third lens L3 may be formed with a synthetic lens with a refractive index higher than 1.6 and lower than 1.65, and the fourth lens L4 may also be formed as a synthetic resin lens formed with a refractive index higher than 1.6 and lower than 1.65. Furthermore, the fifth lens L5 may be formed with a low refractive index of 1.55 or less. Such a refractive index design may enable miniaturization of the lens assembly and/or the electronic device including the same. According to an embodiment, a lens made of a synthetic resin (e.g., synthetic resin) may tend to have an Abbe number that increases or decreases conversely as its refractive index decreases or increases.

According to various embodiments, in the plurality of lenses (e.g., L1, L2, L3, L4, and L5) included in the lens assembly 100, as the spacing between any one lens and another adjacent lens decreases, the TTL (the overall length of the lens assembly in the direction of the optical axis) of the lens assembly 100 may be smaller. For example, when an optical device and/or an electronic device including the lens assembly 100 according to various embodiments of the disclosure is to be made in a small size, it is favorable to keep the TTL of the lens assembly 100 as small as possible. However, there may be physical limitations in decreasing the TTL of the lens assembly 100 with an appropriate telephoto ratio secured. According to various embodiments of the disclosure, the spacing between the plurality of lenses (e.g., L1, L2, L3, L4, and L5) may be variously designed according to the optical characteristics (e.g., aberration characteristics, wide-angle characteristics, and/or brightness characteristics) required for the lens assembly 100.

According to various embodiments, the lens assembly 100 may include at least one aperture stop sto. The amount of light reaching the imaging plane img of the image sensor IS may be controlled by adjusting the size of the aperture stop. According to an embodiment, the aperture stop may be disposed between the second lens L2 and the third lens L3. According to various embodiments of the disclosure, a small optical system capable of supporting a high-pixel sensor may be configured by disposing an aperture stop that determines the F number (Fno) of the entire optical system between the second lens L2 and the third lens L3, and adjusting the specifications of the third lens L3, the fourth lens L4, and the fifth lens L5.

According to various embodiments, the lens assembly 100 may further include the filter F disposed between the fifth lens L5 and the image sensor IS. The filter F may block light detected by a film or an image sensor of an optical device, for example, infrared rays. The filter F may include, for example, at least one of a low pass filter or a cover glass. For example, when the filter F is mounted, the color tone of an image detected and captured by the image sensor IS may be made close to a color tone that a person perceives when viewing an actual object. In addition, the filter F may transmit visible light and emit infrared rays to the outside, thereby preventing the infrared rays from being transmitted to the imaging plane img of the image sensor.

According to various embodiments, according to an embodiment, the lens assembly 100 may be made compact and capable of effective chromatic aberration correction by arranging lenses with positive, negative, positive, negative, and positive refractive powers in order from the object side.

The lens assembly 100 may have high-performance optical characteristics while being miniaturized by satisfying the following [Equation 1] and [Equation 2].

[Equation 1]

$$2.45 \le \frac{vd_3 + vd_4}{vd_2} \le 3.45$$

[Equation 2]

$$70 \le FoV \le 90$$

In [Equation 1], Vd2 is the Abbe number of the second lens L2, Vd3 is the Abbe number of the third lens L3, and Vd4 is the Abbe number of the fourth lens L4. In [Equation 2], FoV may mean the field of view of the entire optical system. [Equation 1] represents the ratio of the sum of the Abbe numbers of the third lens L3 and the fourth lens L4 to the Abbe number of the second lens L2. When the ratio exceeds the upper limit, the Abbe number of the third lens L3 and/or the fourth lens L4 increases, which is advantageous for chromatic aberration correction. However, the resulting low refractive index may make it difficult to secure optical performance required for miniaturization of the electronic device. When the ratio is below the lower limit, the Abbe number of the third lens L3 and/or the fourth lens L4 decreases, and the resulting increase of chromatic aberration may make it difficult to secure optical system performance suitable for high pixels. [Equation 2] represents the field of view of the entire optical system. When the field of view exceeds the upper limit, the field of view increases, and the resulting decrease of the focal length of the entire optical system may be advantageous for miniaturization, but make it difficult to secure the performance and light quantity of the marginal portion. When the field of view is below the lower limit, the decrease of the field of view may be advantageous for securing the performance of the marginal portion, but unfavorable for miniaturization of the electronic device due to the increase in the focal length of the entire optical system. According to an embodiment, [Equation 2] may be expressed as a 35mm film-equivalent focal length. For example, a field of view of 70 degrees may correspond to an equivalent focal length of 30.9mm, and a field of view of 90 degrees may correspond to an equivalent focal length of 21.6mm.

Further, the lens assembly 100 may satisfy the following [Equation 3].

[Equation 3]

$$50 \leq Vd_1 \leq 60$$

In [Equation 3], Vd1 may represent the Abbe number of the first lens L1. [Equation 3] is an equation that defines the Abbe number of the first lens L1 closest to the object side O. When the first lens L1 is made of a material with a value less than the lower limit in [Equation 3], the difference in refractive index for each wavelength in the visible light region entering from the object side increases, making it difficult to correct chromatic aberration. When the Abbe number exceeds the upper limit of [Equation 3], it may be difficult to apply a synthetic resin material, which may increase manufacturing cost and make it difficult to reduce the weight of a product.

Further, the lens assembly 100 may satisfy the following [Equation 4].

[Equation 4]

$$1.65 \leq nd_2 \leq 1.75$$

In [Equation 4], nd2 may represent the refractive index of the second lens L2. According to an embodiment, the refractive index of the second lens L2 may be a refractive index when light with a wavelength (d-line) of approximately 587.5600nm is incident on the lens assembly 100. When the refractive index is below the lower limit in [Equation 4], it is difficult to miniaturize the entire optical system due to the low refractive index of the second lens L2. When the refractive index exceeds the upper limit in [Equation 4], it may be difficult to apply a synthetic resin material, which may increase manufacturing cost and make it difficult to reduce the weight of a product. It may be possible to miniaturize the product while securing the field of view of the entire optical system to be approximately greater than 70 degrees and less than approximately 90 degrees by having a high refractive index for the second lens L2. Chromatic aberration may be effectively controlled by forming the first lens L1 with a low refractive index and a large Abbe number, and forming the second lens L2 of a material with a low refractive index and a low Abbe number.

Further, the lens assembly 100 may satisfy the following [Equation 5] and [Equation 6].

[Equation 5]

$$1.55 \leq nd_3 \leq 1.65$$

[Equation 6]

$$1.55 \leq nd_4 \leq 1.65$$

In [Equation 5], nd3 may represent the refractive index of the third lens L3. In [Equation 6], nd4 may represent the refractive index of the fourth lens L4. The refractive index nd3 of the third lens L3 and the refractive index nd4 of the fourth lens L4 may be refractive indexes when light with a wavelength (d-line) of approximately 587.5600nm is incident on the lens assembly 100. The refractive index nd3 of the third lens L3 and the refractive index nd4 of the fourth lens L4 may be lower than the refractive index of the second lens L2. It may be possible to adopt a synthetic resin that satisfies [Equation 1] by applying the third lens L3 and the fourth lens L4 as lenses having refractive indexes satisfying [Equation 5] and [Equation 6].

Further, the lens assembly 100 may satisfy the following [Equation 7].

$$[\text{Equation 7}]$$

$$1.2 \leq \frac{Oal}{IH} \leq 1.4$$

Herein, Oal may be the distance from the surface S1 of the first lens L1 facing the object side O, which is the lens closest to the object side O, to the imaging plane img of the image sensor IS, and IH may be a maximum height of the imaging plane img of the image sensor IS. When the value of [Equation 7] is below the lower limit, the overall length is small relative to the height of the imaging plane, which is advantageous for a miniaturization design, but it may be difficult to control aberrations due to limitations to the number and shape of lenses, making it difficult to capture clear images when applying a high-pixel sensor. When the value exceeds the upper limit, the overall length relative to the height of the imaging plane increases, which may increase the thickness of a portable electronic device when applied to the portable electronic device.

Further, the lens assembly 100 may satisfy the following [Equation 8].

$$[\text{Equation 8}]$$

$$0.25 \leq \frac{D_{1\text{-}3}}{Oal} \leq 0.4$$

Herein, $D_{1\text{-}3}$ may be the distance from the surface S1 of the first lens L1 facing the object side to the surface S7 of the third lens L3 facing the image side, and Oal may be the distance from the surface S1 of the first lens L1 facing the object to the imaging plane img of the image sensor IS. When the value of [Equation 8] is below the lower limit, the distance between the lens and the sensor becomes narrow, resulting in an insufficient assembly space for the image sensor IS and the filter F, and an insufficient focus adjustment margin due to a focus error of each lens, which may cause a large number of focusing defects during manufacturing. When the value of [Equation 8] exceeds the upper limit, the overall length of the entire optical system increases (the outer diameter of the third lens L3 increases), which may make miniaturization difficult.

Further, the lens assembly 100 may satisfy the following [Equation 9].

$$[\text{Equation 9}]$$

$$IH \leq 5.0$$

Herein, IH may be the maximum height of the imaging plane img of the image sensor IS. The disclosure provides the lens assembly 100 that may be miniaturized and applied to a high-pixel image sensor, while satisfying [Equation 9]. When IH exceeds the value in [Equation 9], the maximum image height becomes excessively large, compared to a small number of lenses (e.g., five lenses), which may make it difficult to correct aberration.

[Table 1] below lists various lens data of the lens assembly 100, where 'S1 to S4 and S6 to S13' may refer to the surfaces of a plurality of related lenses (e.g., L1, L2, L3, L4, and L5) and/or the filter F. Further, y radius may represent the radius of curvature of a lens, Thickness may represent the thickness or air gap of the lens, 'Nd' may represent the refractive index of a medium (e.g., lens), and 'Vd' may represent the Abbe number of the lens. The lens assembly 100 included in [Table 1] below may satisfy the above-described conditions (and/or at least one of the above-described conditions) when the F number (Fno) is approximately 1.88, the field of view (ANG) is approximately 79.5 degrees, the focal length is approximately 4.757mm, and the image height (IH) of the image sensor IS is 4.096.

[Table 1]

| surface | surface type | y radius | Thickness | Nd | Vd |
|---|---|---|---|---|---|
| S0 | Sphere | infinity | infinity | | |
| S1 | Odd Polynomial | 1.775 | 0.774 | 1.54401 | 55.91 |
| S2 | Odd Polynomial | 8.642 | 0.121 | | |
| S3 | Odd Polynomial | 9.349 | 0.235 | 1.67074 | 19.23 |
| S4 | Odd Polynomial | 3.571 | 0.235 | | |

(continued)

| surface | surface type | y radius | Thickness | Nd | Vd |
|---|---|---|---|---|---|
| Stop(sto) | Sphere | infinity | 0.133 | | |
| S6 | Odd Polynomial | -29.768 | 0.490 | 1.61444 | 25.93 |
| S7 | Odd Polynomial | -7.139 | 0.801 | | |
| S8 | Odd Polynomial | 6.637 | 0.611 | 1.63491 | 23.96 |
| S9 | Odd Polynomial | 3.480 | 0.267 | | |
| S10 | Odd Polynomial | 2.127 | 0.805 | 1.54401 | 55.91 |
| S11 | Odd Polynomial | 1.786 | 0.210 | | |
| S12 | Odd Polynomial | infinity | 0.21 | 1.51679 | 64.19 |
| S13 | Odd Polynomial | infinity | 0.637 | | |
| img | Sphere | infinity | | | |

According to an embodiment of the disclosure, a lens assembly may be provided in which the five lenses, from the first lens L1 closest to the subject side O to the fifth lens L5 closest to the image side I, have positive, negative, positive, negative, and positive refractive powers, respectively, in order to correspond to a small electronic device. All of the five lenses may be formed to be aspheric to prevent coma from occurring in the marginal portion of the image sensor IS (e.g., a portion of the image sensor IS spaced apart from the optical axis). In order to reduce the overall length of the optical system, there may be a design requirement for the second lens L2, which is the second from the object side, to have a negative refractive power and a high refractive index (e.g., 1.66 or more) for a specific wavelength (e.g., 587.5600nm) of visible light. In response to this, the third lens L3 and the fourth lens L4 may be provided as high-pixel lenses facilitating aberration control by applying a low-refractive material to them. In addition to [Table 1], lens assemblies according to various embodiments described in the following [Table 4], [Table 7], [Table 10], and [Table 13] may be applied to the disclosure. [Table 2] and [Table 3] below list aspheric coefficients of the plurality of lenses (e.g., L1, L2, L3, L4, and L5), and the aspheric coefficients may be calculated by the following [Equation 10].

[Equation 10]

$$x = \frac{(y^2/R)}{1+\sqrt{(1-(1+K)(y/R)^2)}} + \sum_i (A_i)(y^i)$$

Herein, 'x' may represent the distance (sag) from the vertex of a lens in the direction of the optical axis O-I, 'R' may represent the radius of curvature at the vertex of the lens, 'y' may represent the distance in a direction perpendicular to the optical axis, 'K' may represent a conic constant, and '$A_i$' may represent an aspheric coefficient.

[Table 2]

| | S1 | S2 | S3 | S4 | S6 |
|---|---|---|---|---|---|
| K | -4.06210E+00 | 1.97553E+01 | -1.03581E+01 | -2.94244E+00 | -9.90000E+01 |
| $A_4$ | 6.61090E-02 | -7.60946E-02 | -1.10176E-01 | -5.38189E-02 | -5.61489E-02 |
| $A_6$ | 2.70971E-01 | 7.55367E-02 | 1.94388E-01 | 3.35449E-01 | -4.16378E-01 |
| $A_8$ | -2.38463E+00 | -5.41288E-02 | -1.63122E-01 | -3.42695E+00 | 5.17271E+00 |
| $A_{10}$ | 1.21824E+01 | 3.72489E-03 | 1.71729E-01 | 3.47336E+01 | -3.70199E+01 |
| $A_{12}$ | -4.16404E+01 | 4.22804E-02 | -2.80802E-01 | -2.27014E+02 | 1.70538E+02 |
| $A_{14}$ | 9.92673E+01 | -5.64677E-02 | 3.72040E-01 | 9.94147E+02 | -5.33461E+02 |
| $A_{16}$ | -1.68873E+02 | 3.45218E-02 | -2.95081E-01 | -3.02394E+03 | 1.16561E+03 |
| $A_{18}$ | 2.07330E+02 | -1.00035E-02 | 1.27312E-01 | 6.51622E+03 | -1.79922E+03 |
| $A_{20}$ | -1.83858E+02 | 9.81146E-04 | -2.33611E-02 | -1.00076E+04 | 1.95427E+03 |
| $A_{22}$ | 1.16513E+02 | 0.00000E+00 | 0.00000E+00 | 1.08720E+04 | -1.46130E+03 |

(continued)

|  | S1 | S2 | S3 | S4 | S6 |
|---|---|---|---|---|---|
| $A_{24}$ | -5.13896E+01 | 0.00000E+00 | 0.00000E+00 | -8.15272E+03 | 7.15904E+02 |
| $A_{26}$ | 1.49694E+01 | 0.00000E+00 | 0.00000E+00 | 4.00870E+03 | -2.06736E+02 |
| $A_{28}$ | -2.58605E+00 | 0.00000E+00 | 0.00000E+00 | -1.16119E+03 | 2.66512E+01 |
| $A_{30}$ | 2.00445E-01 | 0.00000E+00 | 0.00000E+00 | 1.49916E+02 | 0.00000E+00 |

[Table 3]

|  | S7 | S8 | S9 | S10 | S11 |
|---|---|---|---|---|---|
| K | -6.75889E+01 | -6.86788E+01 | -6.63331E+01 | -1.86876E+01 | -5.18225E+00 |
| $A_4$ | -8.22446E-02 | -3.75087E-02 | -3.22946E-02 | -1.02090E-01 | -8.51519E-02 |
| $A_6$ | 5.50150E-04 | 1.16366E-01 | 7.11310E-02 | 1.11084E-02 | 4.01998E-02 |
| $A_8$ | 3.32930E-02 | -3.20497E-01 | -1.26032E-01 | 2.80353E-02 | -1.70918E-02 |
| $A_{10}$ | 3.60594E-02 | 4.79585E-01 | 1.49434E-01 | -2.91228E-02 | 5.43503E-03 |
| $A_{12}$ | -5.37621E-01 | -4.27282E-01 | -1.30093E-01 | 1.67585E-02 | -1.20847E-03 |
| $A_{14}$ | 1.57071E+00 | 1.55203E-01 | 8.30512E-02 | -6.32712E-03 | 1.60025E-04 |
| $A_{16}$ | -2.41992E+00 | 1.15071E-01 | -3.87739E-02 | 1.64282E-03 | -2.57646E-06 |
| $A_{18}$ | 2.23101E+00 | -2.02547E-01 | 1.32294E-02 | -3.00512E-04 | -3.59526E-06 |
| $A_{20}$ | -1.23634E+00 | 1.42760E-01 | -3.28352E-03 | 3.91139E-05 | 7.73650E-07 |
| $A_{22}$ | 3.80756E-01 | -6.08320E-02 | 5.84988E-04 | -3.60682E-06 | -8.59870E-08 |
| $A_{24}$ | -5.00741E-02 | 1.66643E-02 | -7.27665E-05 | 2.30522E-07 | 5.83409E-09 |
| $A_{26}$ | 0.00000E+00 | -2.87709E-03 | 5.99294E-06 | -9.71953E-09 | -2.43305E-10 |
| $A_{28}$ | 0.00000E+00 | 2.85485E-04 | -2.93403E-07 | 2.43298E-10 | 5.75919E-12 |
| $A_{30}$ | 0.00000E+00 | -1.24223E-05 | 6.46074E-09 | -2.73961E-12 | -5.95120E-14 |

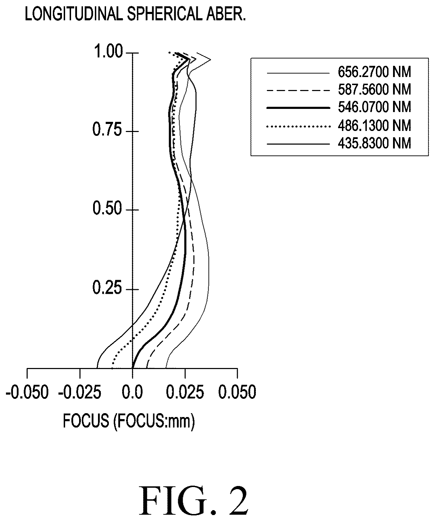

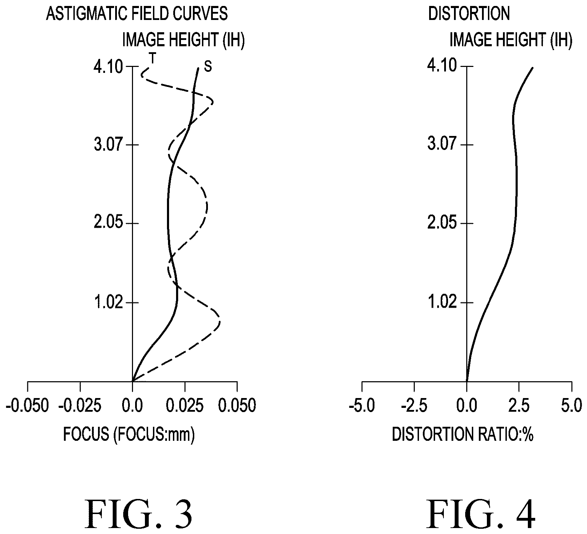

FIG. 2 is a graph illustrating spherical aberration of the lens assembly 100 according to the embodiment of FIG. 1. Spherical aberration may be a phenomenon in which light passing through different portions (e.g., chief portion and marginal portion) of a lens is focused at different positions. In FIG. 2, a horizontal axis represents degrees of longitudinal spherical aberration, and a vertical axis represents normalized distances from the center of the optical axis, and changes in longitudinal spherical aberration according to wavelengths of light may be illustrated. Longitudinal spherical aberrations may be represented, for example, for light having wavelengths of approximately 656.2700 nanometers (nm), approximately 587.5600nm, approximately 546.0700nm, approximately 486.1300nm, and approximately 435.8300nm, respectively. Referring to FIG. 2, it may be identified that the longitudinal spherical aberration of the lens assembly according to various embodiments of the disclosure in the visible light band is limited to within +0.050 to -0.050, thereby exhibiting stable optical characteristics. FIG. 3 is a graph illustrating astigmatism of the lens assembly 100 according to the embodiment of FIG. 1. Astigmatism may be misalignment between the focal points of light passing in vertical and horizontal directions, when the tangential plane (or meridional plane) and sagittal plane of a lens have different radii.

In FIG. 3, the astigmatism of the lens assembly 100 is a result obtained at a wavelength of approximately 546.0700nm, a dotted line may indicate astigmatism T (e.g., meridional curvature) in a tangential direction, and a solid line may indicate astigmatism S (e.g., saccular curvature) in a sagittal direction. As noted from FIG. 3, the astigmatism according to various embodiments of the disclosure is generally limited to within +0.050 to -0.050, which may exhibit stable optical characteristics. In the disclosure, it may be identified that the aspheric coefficient of each lens is applied to up to a high-order term to respond to a high-pixel sensor with a small number of lenses (five lenses), and thus the graph of the astigmatism (e.g., the graph of the astigmatism in the tangential direction) changes rapidly several times from the center to the edge of the image height IMG HT.

FIG. 4 is a graph illustrating distortion of the lens assembly 100 according to the embodiment of FIG. 1. The distortion occurs because an optical magnification changes depending on the distance from the optical axis O-I, and an image formed on an actual imaging plane (e.g., the imaging plane img in FIG. 1) may appear larger or smaller than an image formed on a theoretical imaging plane.

In FIG. 4, the distortion of the lens assembly 100 is a result obtained at a wavelength of approximately 546.0700nm, and an image captured through the lens assembly 100 may be somewhat distorted at a point off the optical axis O-1. However, this distortion is a level that may generally occur in an optical device using a lens, and the distortion is less than approximately 3%, which may provide good optical characteristics.

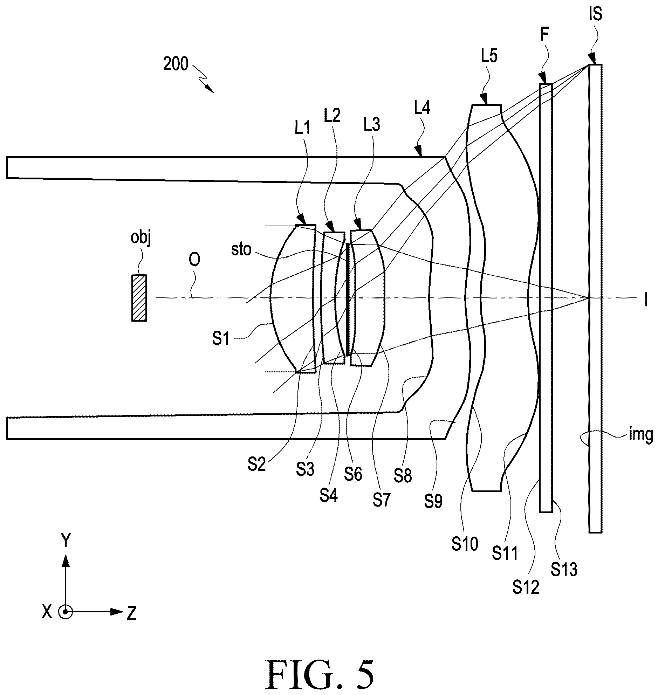

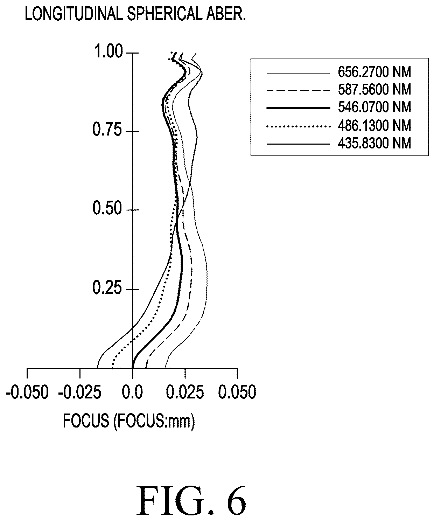

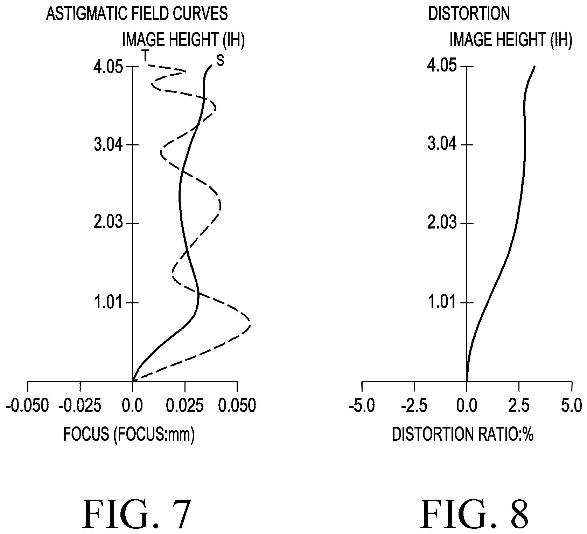

FIG. 5 is a diagram illustrating the configuration of a lens assembly 200 according to an embodiment. FIG. 6 is a graph illustrating spherical aberration of the lens assembly 200 according to the embodiment of FIG. 5. FIG. 7 is a graph illustrating astigmatism of the lens assembly 200 according to the embodiment of FIG. 5. FIG. 8 is a graph illustrating distortion of the lens assembly 200 according to the embodiment of FIG. 5.

The description of the lens assembly 100 according to the foregoing embodiment may be applied to lens assemblies 200, 300, 400, and 500 according to various other embodiments described below. Some of the plurality of lens assemblies 100, 200, 300, 400, and 500 may have the same lens properties (e.g., field of view, focal length, autofocus, F number (Fno), or optical zoom), or at least one lens assembly may have one or more lens properties that are different from the lens properties of other lens assemblies.

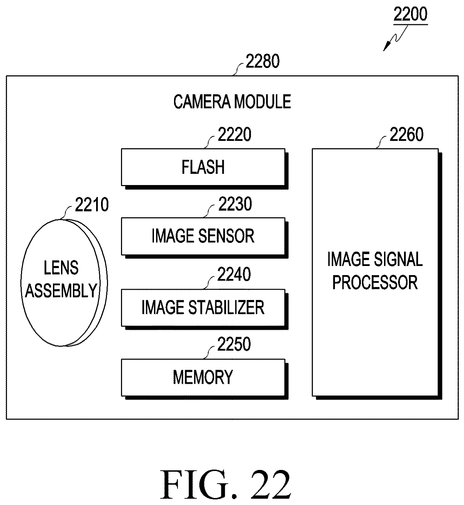

The plurality of lens assemblies 100, 200, 300, 400, and 500 may include a flash (a flash 2220 in FIG. 22 described below), the image sensor IS, an image stabilizer (an image stabilizer 2240 in FIG. 22 described below), memory (memory 2250 in FIG. 22 described below), or an image signal processor (an image signal processor 2260 in FIG. 22 described below), to form an optical device (e.g., a camera module).

In describing various embodiments of the disclosure below, similar reference numerals or no reference numerals may be assigned to components that may be easily understood from the foregoing embodiment in the drawings. In addition, a detailed description of them may be omitted within a redundant range.

Referring to FIGS. 5 to 8 together, the lens assembly 200 according to another embodiment of the disclosure other than the embodiment of FIG. 1 may include a plurality of lenses (e.g., L1, L2, L3, L4, and L5), the image sensor IS, and/or the filter F.

The following [Table 4] may list various lens data of the lens assembly 200 according to the embodiment of FIG. 5. Each of [Table 5] and [Table 6] below may list aspheric coefficients of the plurality of lenses L1, L2, L3, L4, and L5. The lens assembly 200 may satisfy the above-described conditions (and/or at least one of the above-described conditions) when the F number (Fno) is approximately 1.88, the field of view (ANG) is approximately 79.6 degrees, the focal length is approximately 4.690mm, and the image height (IH) of the image sensor IS is 4.054.

[Table 4]

| Surface | surface type | y radius | Thickness | Nd | Vd |
|---------|--------------|----------|-----------|------|------|
| S0 | Sphere | infinity | infinity | | |
| S1 | Odd Polynomial | 1.729 | 0.766 | 1.54401 | 55.91 |
| S2 | Odd Polynomial | 8.214 | 0.123 | | |
| S3 | Odd Polynomial | 9.659 | 0.25 | 1.67074 | 19.23 |
| S4 | Odd Polynomial | 3.527 | 0.224 | | |
| Stop | Sphere | infinity | 0.115 | | |
| S6 | Odd Polynomial | -39.241 | 0.425 | 1.61444 | 25.93 |
| S7 | Odd Polynomial | -7.815 | 0.821 | | |
| S8 | Odd Polynomial | 6.860 | 0.587 | 1.63915 | 23.50 |
| S9 | Odd Polynomial | 3.713 | 0.280 | | |
| S10 | Odd Polynomial | 2.068 | 0.772 | 1.54401 | 55.91 |
| S11 | Odd Polynomial | 1.698 | 0.212 | | |
| S12 | Odd Polynomial | infinity | 0.21 | 1.51679 | 64.19 |
| S13 | Odd Polynomial | infinity | 0.617 | | |
| img | Sphere | infinity | | | |

[Table 5]

|  | S1 | S2 | S3 | S4 | S6 |
|---|---|---|---|---|---|
| K | -4.08848E+00 | 1.86516E+01 | -8.37434E+00 | -2.55267E+00 | -8.35808E+01 |
| $A_4$ | 6.37513E-02 | -8.16926E-02 | -1.11480E-01 | -6.25340E-02 | -5.86729E-02 |
| $A_6$ | 4.00684E-01 | 7.28966E-02 | 1.91461E-01 | 4.63313E-01 | -6.02137E-01 |
| $A_8$ | -3.49827E+00 | -2.17130E-02 | -9.50284E-02 | -3.84357E+00 | 7.99798E+00 |
| $A_{10}$ | 1.81322E+01 | -7.75548E-02 | -3.76379E-02 | 2.95515E+01 | -6.18290E+01 |
| $A_{12}$ | -6.32261E+01 | 1.53805E-01 | 6.39666E-02 | -1.53971E+02 | 3.08337E+02 |
| $A_{14}$ | 1.54471E+02 | -1.50182E-01 | 3.59905E-02 | 5.49694E+02 | -1.04225E+03 |
| $A_{16}$ | -2.70474E+02 | 8.19645E-02 | -1.04123E-01 | -1.35884E+03 | 2.45277E+03 |
| $A_{18}$ | 3.43136E+02 | -2.32526E-02 | 6.95872E-02 | 2.30389E+03 | -4.06168E+03 |
| $A_{20}$ | -3.15576E+02 | 2.52064E-03 | -1.64624E-02 | -2.56919E+03 | 4.71293E+03 |
| $A_{22}$ | 2.08103E+02 | 0.00000E+00 | 0.00000E+00 | 1.65768E+03 | -3.74870E+03 |
| $A_{24}$ | -9.58198E+01 | 0.00000E+00 | 0.00000E+00 | -2.88991E+02 | 1.94551E+03 |
| $A_{26}$ | 2.92291E+01 | 0.00000E+00 | 0.00000E+00 | -3.99318E+02 | -5.92889E+02 |
| $A_{28}$ | -5.30438E+00 | 0.00000E+00 | 0.00000E+00 | 3.00271E+02 | 8.03885E+01 |
| $A_{30}$ | 4.33282E-01 | 0.00000E+00 | 0.00000E+00 | -6.72717E+01 | 0.00000E+00 |

[Table 6]

|  | S7 | S8 | S9 | S10 | S11 |
|---|---|---|---|---|---|
| K | -8.08658E+01 | -8.43132E+01 | -9.69417E+01 | -1.89893E+01 | -5.80551E+00 |
| $A_4$ | -8.61012E-02 | -4.74520E-02 | -2.25117E-02 | -1.09122E-01 | -8.20406E-02 |
| $A_6$ | -1.90768E-02 | 1.80473E-01 | 2.47283E-02 | 1.19432E-02 | 3.81067E-02 |
| $A_8$ | 1.88366E-01 | -5.81688E-01 | -3.89621E-02 | 3.28374E-02 | -1.61424E-02 |
| $A_{10}$ | -5.68855E-01 | 1.13802E+00 | 4.26305E-02 | -3.56021E-02 | 5.18331E-03 |
| $A_{12}$ | 8.28294E-01 | -1.56074E+00 | -4.28200E-02 | 2.14284E-02 | -1.16656E-03 |
| $A_{14}$ | -2.70527E-01 | 1.53963E+00 | 3.49808E-02 | -8.46153E-03 | 1.61790E-04 |
| $A_{16}$ | -1.00622E+00 | -1.10927E+00 | -2.10447E-02 | 2.29778E-03 | -6.47569E-06 |
| $A_{18}$ | 1.76113E+00 | 5.87468E-01 | 9.05095E-03 | -4.39617E-04 | -2.31901E-06 |
| $A_{20}$ | -1.32881E+00 | -2.27990E-01 | -2.76080E-03 | 5.98477E-05 | 5.40462E-07 |
| $A_{22}$ | 5.01124E-01 | 6.38494E-02 | 5.90847E-04 | -5.77236E-06 | -5.88204E-08 |
| $A_{24}$ | -7.67310E-02 | -1.24949E-02 | -8.65439E-05 | 3.85896E-07 | 3.76279E-09 |
| $A_{26}$ | 0.00000E+00 | 1.61153E-03 | 8.24640E-06 | -1.70204E-08 | -1.42575E-10 |
| $A_{28}$ | 0.00000E+00 | -1.22359E-04 | -4.59759E-07 | 4.45740E-10 | 2.90962E-12 |
| $A_{30}$ | 0.00000E+00 | 4.12004E-06 | 1.13642E-08 | -5.25207E-12 | -2.37128E-14 |

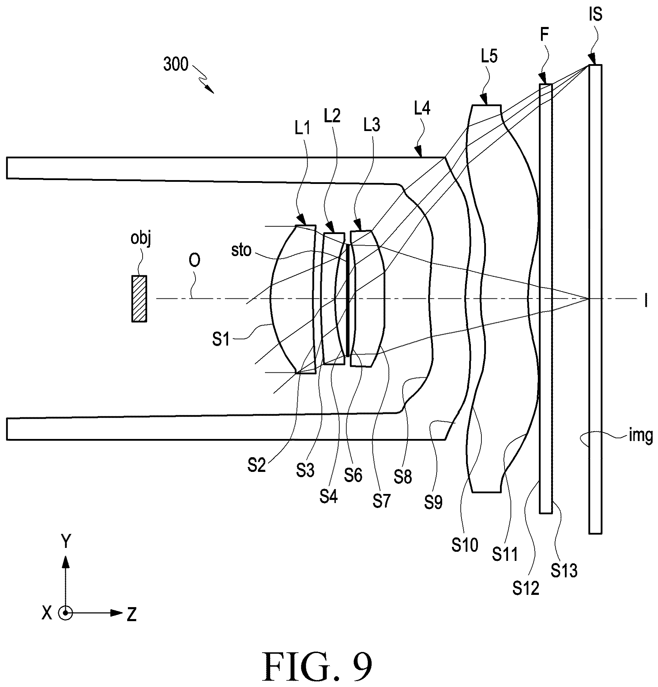

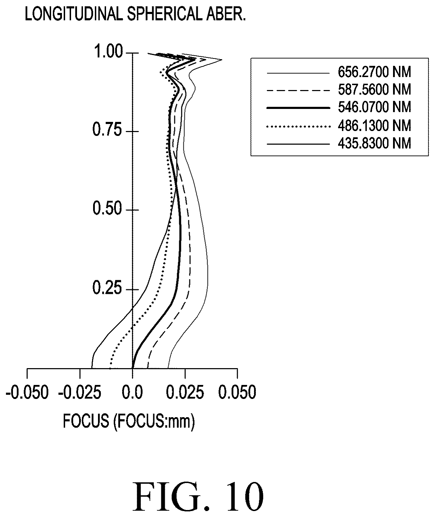

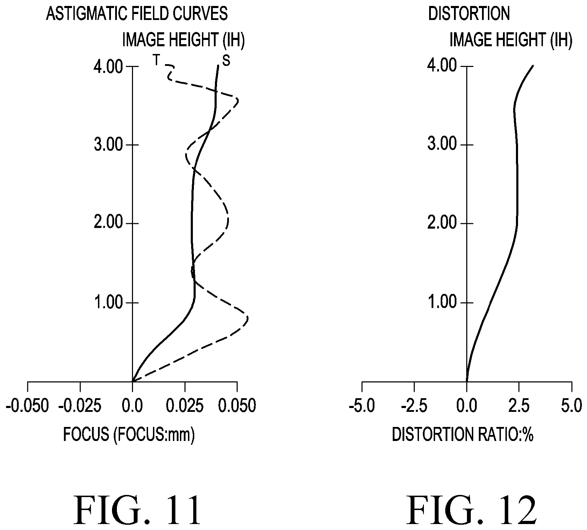

FIG. 9 is a diagram illustrating the configuration of the lens assembly 300 according to an embodiment. FIG. 10 is a graph illustrating spherical aberration of the lens assembly 300 according to the embodiment of FIG. 9. FIG. 11 is a graph illustrating astigmatism of the lens assembly 300 according to the embodiment of FIG. 9. FIG. 12 is a graph illustrating distortion of the lens assembly 300 according to the embodiment of FIG. 9. Referring to FIGS. 9 to 12 together, the lens assembly 300 according to another embodiment of the disclosure may include a plurality of lenses (e.g., L1, L2, L3, L4, and L5), the image sensor IS, and/or the filter F. The following [Table 7] may list various lens data of the lens assembly 300, and each of [Table 8] and [Table 9] below may list aspheric coefficients of the plurality of lenses L1, L2, L3, L4, and L5. The lens assembly 300 may satisfy the above-described conditions (and/or at least one of the above-described conditions) when the number (Fno) is approximately 1.88, the field of view (ANG) is approximately 79.5 degrees, the focal length is approximately 4.64mm, and the image height (IH) of the image sensor IS is 4.00.

[Table 7]

| surface | surface type | y radius | Thickness | Nd | Vd |
|---------|-------------|----------|-----------|----|----|
| S0 | Sphere | Infinity | infinity | | |
| S1 | Odd Polynomial | 1.733 | 0.755 | 1.54401 | 55.91 |
| S2 | Odd Polynomial | 8.580 | 0.114 | | |
| S3 | Odd Polynomial | 10.218 | 0.23 | 1.66065 | 20.36 |
| S4 | Odd Polynomial | 3.572 | 0.232 | | |
| Stop | Sphere | Infinity | 0.133 | | |
| S6 | Odd Polynomial | -32.454 | 0.480 | 1.61444 | 25.93 |
| S7 | Odd Polynomial | -7.098 | 0.785 | | |
| S8 | Odd Polynomial | 6.390 | 0.598 | 1.63910 | 23.96 |
| S9 | Odd Polynomial | 3.169 | 0.252 | | |
| S10 | Odd Polynomial | 1.967 | 0.796 | 1.54401 | 55.91 |
| S11 | Odd Polynomial | 1.722 | 0.208 | | |
| S12 | Odd Polynomial | Infinity | 0.21 | 1.51679 | 64.19 |
| S13 | Odd Polynomial | Infinity | 0.618 | | |
| Img | Sphere | Infinity | | | |

[Table 8]

| | S1 | S2 | S3 | S4 | S6 |
|---|----|----|----|----|----|
| K | -4.05801E+00 | 1.97452E+01 | -1.27927E+01 | -2.91757E+00 | -9.82549E+01 |
| $A_4$ | 6.73271E-02 | -8.23447E-02 | -1.19547E-01 | -8.30130E-02 | -6.50833E-02 |
| $A_6$ | 3.57006E-01 | 8.26514E-02 | 2.17130E-01 | 1.21493E+00 | -4.01084E-01 |
| $A_8$ | -3.27059E+00 | -5.26545E-02 | -1.66843E-01 | -1.81016E+01 | 5.71657E+00 |
| $A_{10}$ | 1.76702E+01 | -7.66382E-03 | 1.29103E-01 | 1.84105E+02 | -4.51034E+01 |
| $A_{12}$ | -6.38595E+01 | 4.36880E-02 | -2.22708E-01 | -1.21365E+03 | 2.25550E+02 |
| $A_{14}$ | 1.60670E+02 | -3.43493E-02 | 3.64336E-01 | 5.43749E+03 | -7.59675E+02 |
| $A_{16}$ | -2.87917E+02 | 4.31730E-03 | -3.38638E-01 | -1.70924E+04 | 1.77806E+03 |
| $A_{18}$ | 3.71699E+02 | 6.63867E-03 | 1.65591E-01 | 3.83498E+04 | -2.92881E+03 |
| $A_{20}$ | -3.46094E+02 | -2.47815E-03 | -3.37478E-02 | -6.17011E+04 | 3.38393E+03 |
| $A_{22}$ | 2.30003E+02 | 0.00000E+00 | 0.00000E+00 | 7.06033E+04 | -2.68375E+03 |
| $A_{24}$ | -1.06278E+02 | 0.00000E+00 | 0.00000E+00 | -5.60573E+04 | 1.39069E+03 |
| $A_{26}$ | 3.24062E+01 | 0.00000E+00 | 0.00000E+00 | 2.93391E+04 | -4.23700E+02 |
| $A_{28}$ | -5.85654E+00 | 0.00000E+00 | 0.00000E+00 | -9.09764E+03 | 5.74946E+01 |
| $A_{30}$ | 4.74656E-01 | 0.00000E+00 | 0.00000E+00 | 1.26536E+03 | 0.00000E+00 |

[Table 9]

| | S7 | S8 | S9 | S10 | S11 |
|---|----|----|----|----|----|
| K | -6.95076E+01 | -6.87890E+01 | -6.40796E+01 | -1.82468E+01 | -5.25313E+00 |

(continued)

|  | S7 | S8 | S9 | S10 | S11 |
|---|---|---|---|---|---|
| $A_4$ | -9.36606E-02 | -4.08369E-02 | -2.94355E-02 | -1.09667E-01 | -9.08868E-02 |
| $A_6$ | 7.03460E-02 | 1.13335E-01 | 5.41126E-02 | 1.26893E-02 | 4.48303E-02 |
| $A_8$ | -4.09408E-01 | -2.78324E-01 | -8.41789E-02 | 3.29684E-02 | -1.98083E-02 |
| $A_{10}$ | 1.80476E+00 | 3.50061E-01 | 8.76408E-02 | -3.59725E-02 | 6.54987E-03 |
| $A_{12}$ | -5.14795E+00 | -2.27241E-01 | -7.22237E-02 | 2.17072E-02 | -1.51752E-03 |
| $A_{14}$ | 9.59527E+00 | -3.22273E-02 | 4.67680E-02 | -8.59122E-03 | 2.09850E-04 |
| $A_{16}$ | -1.18053E+01 | 2.29578E-01 | -2.30277E-02 | 2.33818E-03 | -3.67019E-06 |
| $A_{18}$ | 9.51076E+00 | -2.50919E-01 | 8.42461E-03 | -4.48311E-04 | -5.08120E-06 |
| $A_{20}$ | -4.82542E+00 | 1.58555E-01 | -2.25174E-03 | 6.11605E-05 | 1.14247E-06 |
| $A_{22}$ | 1.39867E+00 | -6.56012E-02 | 4.31286E-04 | -5.91128E-06 | -1.32425E-07 |
| $A_{24}$ | -1.76424E-01 | 1.80367E-02 | -5.74225E-05 | 3.95983E-07 | 9.36412E-09 |
| $A_{26}$ | 0.00000E+00 | -3.17871E-03 | 5.03415E-06 | -1.74987E-08 | -4.06828E-10 |
| $A_{28}$ | 0.00000E+00 | 3.24889E-04 | -2.60824E-07 | 4.59070E-10 | 1.00280E-11 |
| $A_{30}$ | 0.00000E+00 | -1.46283E-05 | 6.04279E-09 | -5.41736E-12 | -1.07864E-13 |

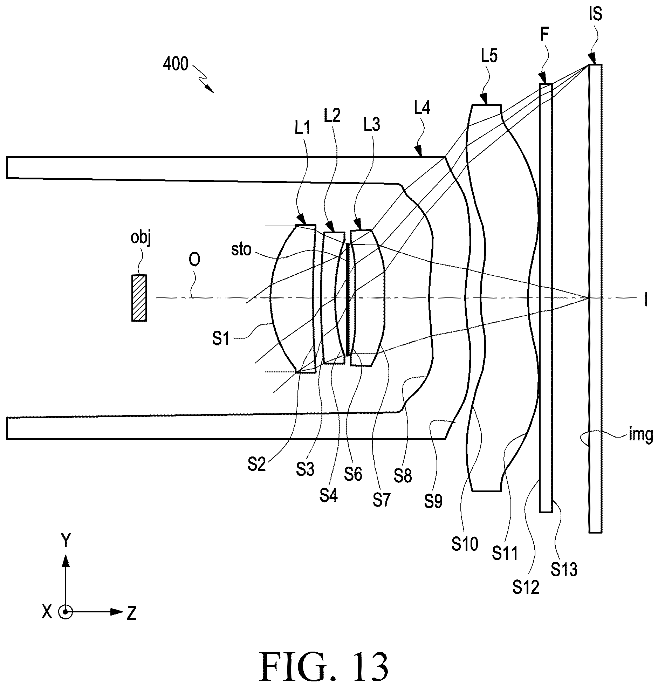

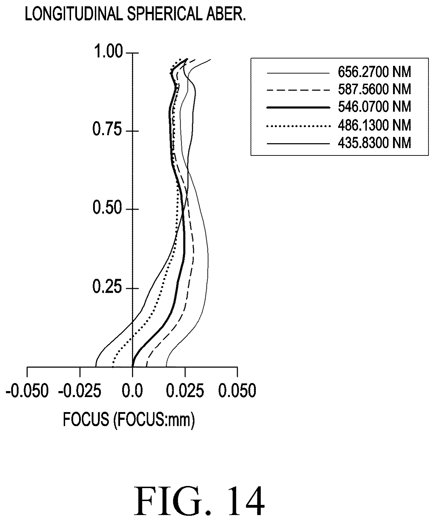

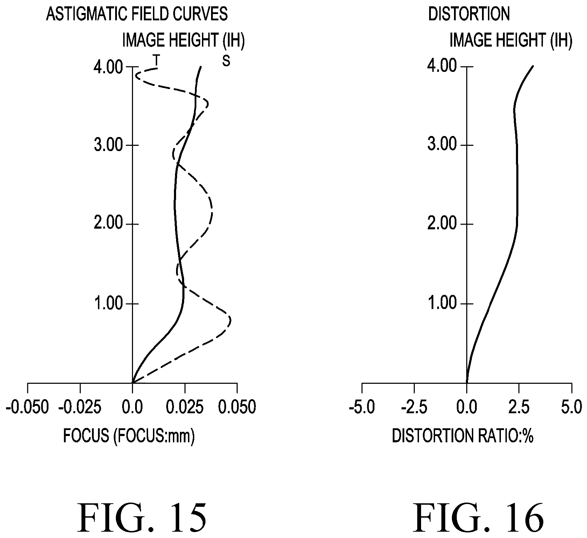

FIG. 13 is a diagram illustrating the configuration of the lens assembly 400 according to an embodiment. FIG. 14 is a graph illustrating spherical aberration of the lens assembly 400 according to the embodiment of FIG. 13. FIG. 15 is a graph illustrating astigmatism of the lens assembly 400 according to the embodiment of FIG. 13. FIG. 16 is a graph illustrating distortion of the lens assembly 400 according to the embodiment of FIG. 13. Referring to FIGS. 13 to 16, the lens assembly 400 according to another embodiment of the disclosure may include a plurality of lenses (e.g., L1, L2, L3, L4, and L5), the image sensor IS, and/or the filter F. The following [Table 10] may list various lens data of the lens assembly 400, and each of [Table 11] and [Table 12] below may list aspheric coefficients of the plurality of lenses L1, L2, L3, L4, and L5. The lens assembly 400 may satisfy the above-described conditions (and/or at least one of the above-described conditions) when the F number (Fno) is approximately 1.88, the field of view (ANG) is approximately 79.65degrees, the focal length is approximately 4.64mm, and the image height (IH) of the image sensor IS is 4.00.

[Table 10]

| surface | surface type | y radius | Thickness | Nd | Vd |
|---|---|---|---|---|---|
| S0 | Sphere | Infinity | infinity | | |
| S1 | Odd Polynomial | 1.733 | 0.756 | 1.54401 | 55.91 |
| S2 | Odd Polynomial | 8.461 | 0.119 | | |
| S3 | Odd Polynomial | 9.318 | 0.23 | 1.67074 | 19.22 |
| S4 | Odd Polynomial | 3.503 | 0.230 | | |
| Stop | Sphere | Infinity | 0.130 | | |
| S6 | Odd Polynomial | -29.441 | 0.476 | 1.61444 | 25.93 |
| S7 | Odd Polynomial | -6.986 | 0.778 | | |
| S8 | Odd Polynomial | 6.404 | 0.596 | 1.61444 | 25.93 |
| S9 | Odd Polynomial | 3.310 | 0.259 | | |
| S10 | Odd Polynomial | 2.045 | 0.784 | 1.54401 | 55.91 |
| S11 | Odd Polynomial | 1.724 | 0.209 | | |
| S12 | Odd Polynomial | Infinity | 0.21 | 1.51679 | 64.19 |
| S13 | Odd Polynomial | Infinity | 0.618 | | |

(continued)

| surface | surface type | y radius | Thickness | Nd | Vd |
|---------|--------------|----------|-----------|-----|-----|
| img | Sphere | Infinity | | | |

[Table 11]

| | S1 | S2 | S3 | S4 | S6 |
|---|-----|-----|-----|-----|-----|
| K | -4.06609E+00 | 1.97726E+01 | 1.97726E+01 | -2.96675E+00 | -9.90000E+01 |
| $A_4$ | 0.00000E+00 | 0.00000E+00 | 0.00000E+00 | 0.00000E+00 | 0.00000E+00 |
| $A_6$ | 6.91909E-02 | -8.06966E-02 | -8.06966E-02 | -6.09163E-02 | -6.24084E-02 |
| $A_8$ | 3.32192E-01 | 8.04616E-02 | 8.04616E-02 | 4.27965E-01 | -4.27983E-01 |
| $A_{10}$ | -3.04855E+00 | -5.38821E-02 | -5.38821E-02 | -4.57073E+00 | 5.66143E+00 |
| $A_{12}$ | 1.63380E+01 | -6.24720E-03 | -6.24720E-03 | 4.68375E+01 | -4.29778E+01 |
| $A_{14}$ | -5.85521E+01 | 5.35494E-02 | 5.35494E-02 | -3.15543E+02 | 2.09871E+02 |
| $A_{16}$ | 1.46250E+02 | -5.86332E-02 | -5.86332E-02 | 1.43782E+03 | -6.95616E+02 |
| $A_{18}$ | -2.60542E+02 | 2.86254E-02 | 2.86254E-02 | -4.56821E+03 | 1.60980E+03 |
| $A_{20}$ | 3.34835E+02 | -5.00452E-03 | -5.00452E-03 | 1.02951E+04 | -2.63052E+03 |
| $A_{22}$ | -3.10725E+02 | -2.83505E-04 | -2.83505E-04 | -1.65358E+04 | 3.02298E+03 |
| $A_{24}$ | 2.06018E+02 | 0.00000E+00 | 0.00000E+00 | 1.87754E+04 | -2.38995E+03 |
| $A_{26}$ | -9.50609E+01 | 0.00000E+00 | 0.00000E+00 | -1.47013E+04 | 1.23697E+03 |
| $A_{28}$ | 2.89684E+01 | 0.00000E+00 | 0.00000E+00 | 7.53949E+03 | -3.77053E+02 |
| $A_{30}$ | -5.23592E+00 | 0.00000E+00 | 0.00000E+00 | -2.27502E+03 | 5.12627E+01 |

[Table 12]

| | S7 | S8 | S9 | S10 | S11 |
|---|-----|-----|-----|-----|-----|
| K | -6.78604E+01 | -6.71677E+01 | -6.37946E+01 | -1.81597E+01 | -5.17293E+00 |
| $A_4$ | 0.00000E+00 | 0.00000E+00 | 0.00000E+00 | 0.00000E+00 | 0.00000E+00 |
| $A_6$ | -8.97386E-02 | -3.85381E-02 | -3.39586E-02 | -1.09241E-01 | -9.11802E-02 |
| $A_8$ | 1.94394E-02 | 1.16314E-01 | 7.57263E-02 | 1.24575E-02 | 4.51661E-02 |
| $A_{10}$ | -8.82449E-02 | -3.07923E-01 | -1.35147E-01 | 3.28617E-02 | -2.01257E-02 |
| $A_{12}$ | 5.52377E-01 | 4.02629E-01 | 1.63365E-01 | -3.57392E-02 | 6.70470E-03 |
| $A_{14}$ | -1.97924E+00 | -2.25985E-01 | -1.47610E-01 | 2.15288E-02 | -1.56209E-03 |
| $A_{16}$ | 4.27215E+00 | -1.74383E-01 | 9.89312E-02 | -8.50848E-03 | 2.16807E-04 |
| $A_{18}$ | -5.82999E+00 | 4.85480E-01 | -4.87472E-02 | 2.31254E-03 | -3.68312E-06 |
| $A_{20}$ | 5.08761E+00 | -4.96986E-01 | 1.75881E-02 | -4.42803E-04 | -5.34002E-06 |
| $A_{22}$ | -2.75584E+00 | 3.09247E-01 | -4.61804E-03 | 6.03283E-05 | 1.20441E-06 |
| $A_{24}$ | 8.44714E-01 | -1.27157E-01 | 8.70156E-04 | -5.82303E-06 | -1.40258E-07 |
| $A_{26}$ | -1.11861E-01 | 3.48013E-02 | -1.14423E-04 | 3.89549E-07 | 9.96936E-09 |
| $A_{28}$ | 0.00000E+00 | -6.10813E-03 | 9.95736E-06 | -1.71913E-08 | -4.35493E-10 |
| $A_{30}$ | 0.00000E+00 | 6.22322E-04 | -5.14896E-07 | 4.50400E-10 | 1.07957E-11 |

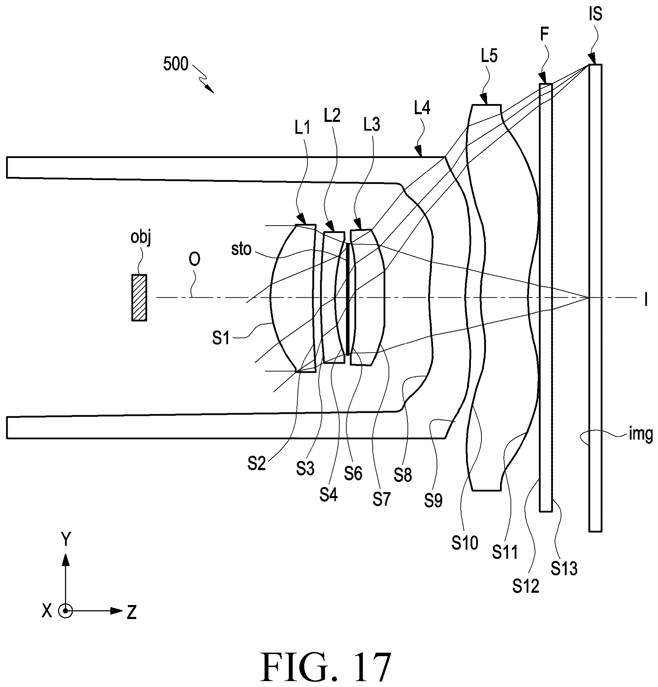

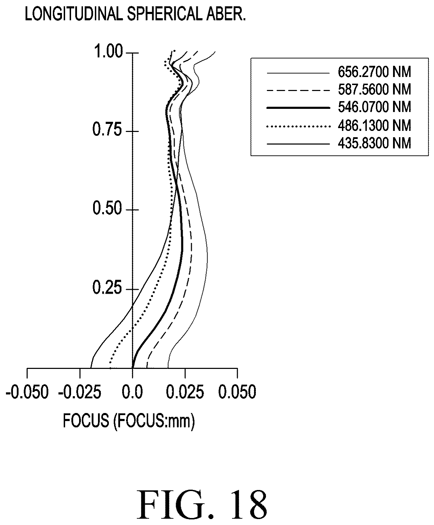

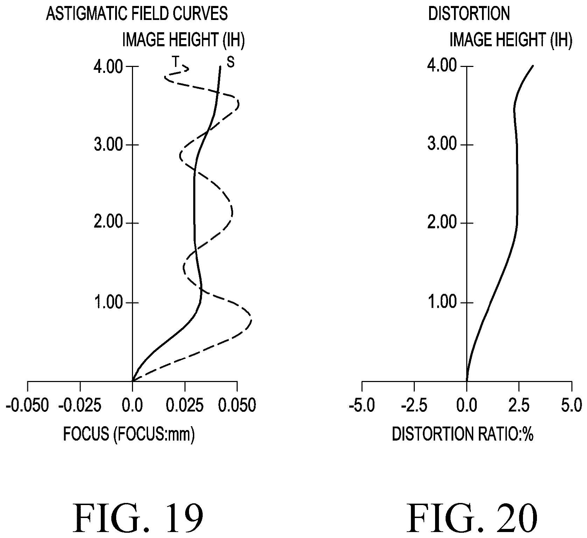

FIG. 17 is a diagram illustrating the configuration of the lens assembly 500 according to an embodiment. FIG. 18 is a graph illustrating spherical aberration of the lens assembly 500 according to the embodiment of FIG. 17. FIG. 19 is a graph illustrating astigmatism of the lens assembly 500 according to the embodiment of FIG. 17. FIG. 20 is a graph illustrating distortion of the lens assembly 500 according to the embodiment of FIG. 17. Referring to FIGS. 17 to 20, the lens assembly 500 according to another embodiment of the disclosure may include a plurality of lenses (e.g., L1, L2, L3, L4, and L5), the image sensor IS, and/or the filter F. The following [Table 13] may list various lens data of the lens assembly 500, and each of [Table 14] and [Table 15] below may list aspheric coefficients of the plurality of lenses L1, L2, L3, L4, and L5. The lens assembly 500 may satisfy the above-described conditions (and/or at least one of the above-described conditions) when the F number (Fno) is approximately 1.88, the field of view (ANG) is approximately 79.5 degrees, the focal length is approximately 4.64mm, and the image height (IH) of the image sensor IS is 4.00.

[Table 13]

| surface | surface type | y radius | Thickness | Nd | Vd |
|---|---|---|---|---|---|
| S0 | Sphere | infinity | infinity | | |
| S1 | Odd Polynomial | 1.732 | 0.754 | 1.54401 | 55.91 |
| S2 | Odd Polynomial | 8.708 | 0.113 | | |
| S3 | Odd Polynomial | 11.137 | 0.23 | 1.66065 | 20.36 |
| S4 | Odd Polynomial | 3.620 | 0.234 | | |
| Stop | Sphere | infinity | 0.134 | | |
| S6 | Odd Polynomial | -39.957 | 0.476 | 1.61444 | 25.93 |
| S7 | Odd Polynomial | -7.265 | 0.784 | | |
| S8 | Odd Polynomial | 6.230 | 0.591 | 1.61444 | 25.93 |
| S9 | Odd Polynomial | 3.010 | 0.247 | | |
| S10 | Odd Polynomial | 1.914 | 0.803 | 1.54401 | 55.91 |
| S11 | Odd Polynomial | 1.702 | 0.213 | | |
| S12 | Odd Polynomial | infinity | 0.21 | 1.51679 | 64.19 |
| S13 | Odd Polynomial | infinity | 0.618 | | |
| img | Sphere | infinity | | | |

[Table 14]

| | S1 | S2 | S3 | S4 | S6 |
|---|---|---|---|---|---|
| K | -4.05609E+00 | 1.97653E+01 | -1.58453E+01 | -3.00507E+00 | -2.02936E+01 |
| $A_4$ | 6.25688E-02 | -8.46369E-02 | -1.21527E-01 | -8.10378E-02 | -5.27741E-02 |
| $A_6$ | 4.37263E-01 | 9.53513E-02 | 2.16148E-01 | 9.81614E-01 | -6.29940E-01 |
| $A_8$ | -3.98266E+00 | -1.06038E-01 | -1.36469E-01 | -1.29412E+01 | 8.16381E+00 |
| $A_{10}$ | 2.15655E+01 | 1.42435E-01 | 3.99232E-02 | 1.24629E+02 | -6.17357E+01 |
| $A_{12}$ | -7.79862E+01 | -2.15259E-01 | -1.00145E-01 | -7.89040E+02 | 3.01411E+02 |
| $A_{14}$ | 1.96231E+02 | 2.37343E-01 | 2.76519E-01 | 3.41296E+03 | -9.99195E+02 |
| $A_{16}$ | -3.51808E+02 | -1.65072E-01 | -3.10167E-01 | -1.03796E+04 | 2.31020E+03 |
| $A_{18}$ | 4.54825E+02 | 6.43747E-02 | 1.64922E-01 | 2.25441E+04 | -3.76433E+03 |
| $A_{20}$ | -4.24638E+02 | -1.07658E-02 | -3.49392E-02 | -3.50996E+04 | 4.30358E+03 |
| $A_{22}$ | 2.83390E+02 | 0.00000E+00 | 0.00000E+00 | 3.88288E+04 | -3.37634E+03 |
| $A_{24}$ | -1.31721E+02 | 0.00000E+00 | 0.00000E+00 | -2.97606E+04 | 1.72991E+03 |
| $A_{26}$ | 4.04755E+01 | 0.00000E+00 | 0.00000E+00 | 1.50071E+04 | -5.20871E+02 |
| $A_{28}$ | -7.38607E+00 | 0.00000E+00 | 0.00000E+00 | -4.47276E+03 | 6.98281E+01 |
| $A_{30}$ | 6.05738E-01 | 0.00000E+00 | 0.00000E+00 | 5.96195E+02 | 0.00000E+00 |

[Table 15]

|  | S7 | S8 | S9 | S10 | S11 |
|---|---|---|---|---|---|
| K | -7.32949E+01 | -6.32493E+01 | -5.82456E+01 | -1.72410E+01 | -5.14187E+00 |
| $A_4$ | -8.69902E-02 | -4.30216E-02 | -3.24897E-02 | -1.09803E-01 | -9.09910E-02 |
| $A_6$ | 1.19303E-03 | 1.28373E-01 | 6.39857E-02 | 1.28448E-02 | 4.49243E-02 |
| $A_8$ | 1.81276E-02 | -3.14421E-01 | -9.73908E-02 | 3.30508E-02 | -1.98690E-02 |
| $A_{10}$ | 1.62012E-01 | 3.99952E-01 | 1.00802E-01 | -3.61234E-02 | 6.55913E-03 |
| $A_{12}$ | -1.03417E+00 | -2.53774E-01 | -8.24818E-02 | 2.18140E-02 | -1.51411E-03 |
| $A_{14}$ | 2.71192E+00 | -6.72002E-02 | 5.29108E-02 | -8.63867E-03 | 2.07616E-04 |
| $A_{16}$ | -4.06528E+00 | 3.16730E-01 | -2.57993E-02 | 2.35248E-03 | -3.02347E-06 |
| $A_{18}$ | 3.74591E+00 | -3.40898E-01 | 9.35804E-03 | -4.51318E-04 | -5.20317E-06 |
| $A_{20}$ | -2.10234E+00 | 2.15326E-01 | -2.48476E-03 | 6.16058E-05 | 1.5903E-06 |
| $A_{22}$ | 6.60968E-01 | -8.91863E-02 | 4.73893E-04 | -5.95745E-06 | -1.34111E-07 |
| $A_{24}$ | -8.92252E-02 | 2.45333E-02 | -6.29856E-05 | 3.99259E-07 | 9.49239E-09 |
| $A_{26}$ | 0.00000E+00 | -4.32359E-03 | 5.52701E-06 | -1.76499E-08 | -4.13701E-10 |
| $A_{28}$ | 0.00000E+00 | 4.41947E-04 | -2.87432E-07 | 4.63147E-10 | 1.02550E-11 |
| $A_{30}$ | 0.00000E+00 | -1.99154E-05 | 6.70392E-09 | -5.46596E-12 | -1.11267E-13 |

In the above-described embodiments, various data of lenses in lens assemblies (e.g., 100, 200, 300, 400, and 500) and/or electronic devices including the lens assemblies (e.g., 100, 200, 300, 400, and 500) may be identified. These data may satisfy the above-described conditions, for example, the results of [Equation 1] to [Equation 9].

[Table 16]

|  | Embodiment 1 | Embodiment 2 | Embodiment 3 | Embodiment 4 | Embodiment 5 |
|---|---|---|---|---|---|
| Equation 1 | 2.594 | 2.570 | 2.450 | 2.698 | 2.547 |
| Equation 2 | 79.5 | 79.6 | 79.5 | 79.5 | 79.6 |
| Equation 3 | 55.91 | 55.91 | 55.91 | 55.91 | 55.91 |
| Equation 4 | 1.67074 | 1.66065 | 1.66065 | 1.67074 | 1.66065 |
| Equation 5 | 1.61444 | 1.61444 | 1.61444 | 1.61444 | 1.61444 |
| Equation 6 | 1.63491 | 1.63915 | 1.63910 | 1.61444 | 1.61444 |
| Equation 7 | 1.356 | 1.339 | 1.359 | 1.355 | 1.358 |
| Equation 8 | 0.358 | 0.351 | 0.358 | 0.358 | 0.358 |
| Equation 9 | 4.096 | 4.054 | 4.00 | 4.00 | 4.00 |

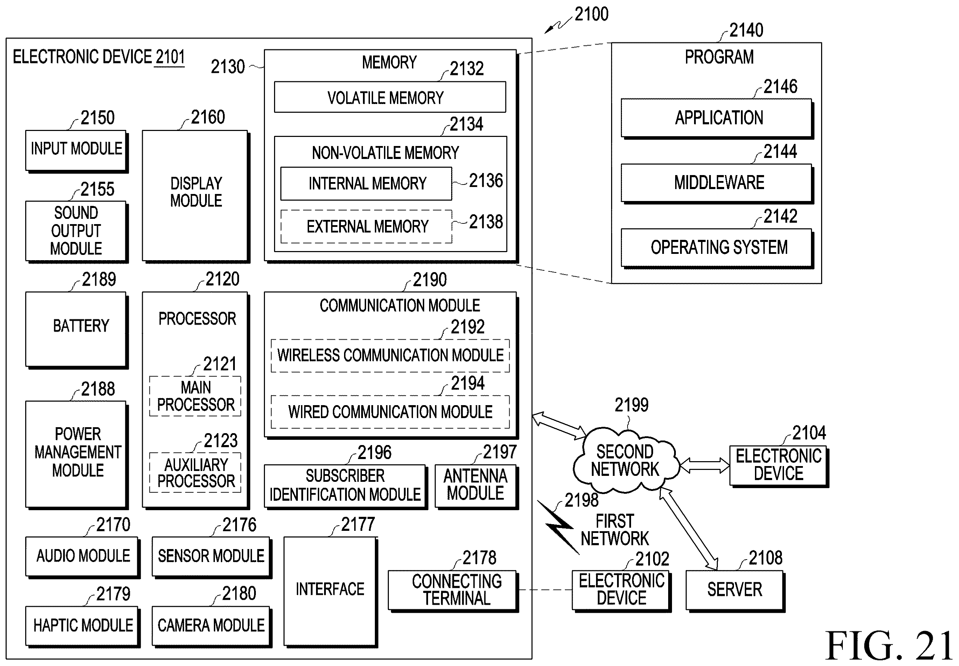

In [Table 16] above, 'Embodiment 1' may refer to the lens assembly 100 illustrated in FIG. 1, 'Embodiment 2' may refer to the lens assembly 200 illustrated in FIG. 5, 'Embodiment 3' may refer to the lens assembly 300 illustrated in FIG. 9, 'Embodiment 4' may refer to the lens assembly 400 illustrated in FIG. 13, and 'Embodiment 5' may refer to the lens assembly 500 illustrated in FIG. 17. The above-described various lens assemblies (e.g., 100, 200, 300, 400, and 500) may be mounted and used in an electronic device (e.g., optical device). The electronic device (e.g., optical device) may further include an application processor (AP) in addition to the image sensor IS, and may control a number of hardware or software components connected to the AP and perform various data processing and computations through the AP, for example, by driving an operating system or an application program. For example, the AP may further include a graphic processing unit (GPU) and/or an image signal processor. When the image signal processor is included in the AP, an image (or video) obtained by the image sensor IS may be stored or output using the AP. FIG. 21 is a block diagram illustrating an electronic device 2101 (e.g., optical device) in a network environment 2100 according to various embodiments. Referring to FIG. 21, the electronic device 2101 (e.g., optical device) in the network environment 2100 may communicate with an electronic device 2102 via a first network 2198 (e.g., a short-range wireless communication network), or at least one of an electronic device 2104 or a server 2108 via a second network 2199 (e.g., a long-range wireless communication network). According to an embodiment, the electronic device 2101 may communicate with the electronic device 2104 via the server 2108. According to an embodiment, the electronic device 2101 may include a processor 2120, memory 2130, an input module 2150, a sound output module 2155, a display module 2160, an audio module 2170, a sensor module 2176, an interface 2177, a connecting terminal 2178, a haptic module 2179, a camera module 2180, a power management module 2188, a battery 2189, a communication module 2190, a subscriber identification module(SIM) 2196, or an antenna module 2197. In some embodiments, at least one of the components (e.g., the display device 2160 or the camera module 2180) may be omitted from the electronic device 2101, or one or more other components may be added in the electronic device 2101. In some embodiments, some of the components (e.g., the sensor module 2176, the camera module 2180, or the antenna module 2197) may be implemented as a single component (e.g., the display module 2160).

The processor 2120 may execute, for example, software (e.g., a program 2140) to control at least one other component (e.g., a hardware or software component) of the electronic device 2101 coupled with the processor 2120, and may perform various data processing or computation. According to one embodiment, as at least part of the data processing or computation, the processor 2120 may store a command or data received from another component (e.g., the sensor module 2176 or the communication module 2190) in volatile memory 2132, process the command or the data stored in the volatile memory 2132, and store resulting data in non-volatile memory 2134. According to an embodiment, the processor 2120 may include a main processor 2121 (e.g., a central processing unit (CPU) or an application processor (AP)), or an auxiliary processor 2123 (e.g., a graphics processing unit (GPU), a neural processing unit (NPU), an image signal processor (ISP), a sensor hub processor, or a communication processor (CP)) that is operable independently from, or in conjunction with, the main processor 2121. For example, when the electronic device 2101 includes the main processor 2121 and the auxiliary processor 2123, the auxiliary processor 2123 may be adapted to consume less power than the main processor 2121, or to be specific to a specified function. The auxiliary processor 2123 may be implemented as separate from, or as part of the main processor 2121.

The auxiliary processor 2123 may control at least some of functions or states related to at least one component (e.g., the display module 2160, the sensor module 2176, or the communication module 2190) among the components of the electronic device 2101, instead of the main processor 2121 while the main processor 2121 is in an inactive (e.g., sleep) state, or together with the main processor 2121 while the main processor 2121 is in an active state (e.g., executing an application). According to an embodiment, the auxiliary processor 2123 (e.g., an image signal processor or a communication processor) may be implemented as part of another component (e.g., the camera module 2180 or the communication module 2190) functionally related to the auxiliary processor 2123. According to an embodiment, the auxiliary processor 2123 (e.g., the neural processing unit) may include a hardware structure specified for artificial intelligence model processing. An artificial intelligence model may be generated by machine learning. Such learning may be performed, e.g., by the electronic device 2100 where the artificial intelligence is performed or via a separate server (e.g., the server 2108). Learning algorithms may include, but are not limited to, e.g., supervised learning, unsupervised learning, semi-supervised learning, or reinforcement learning. The artificial intelligence model may include a plurality of artificial neural network layers. The artificial neural network may be a deep neural network (DNN), a convolutional neural network (CNN), a recurrent neural network (RNN), a restricted boltzmann machine (RBM), a deep belief network (DBN), a bidirectional recurrent deep neural network (BRDNN), deep Q-network or a combination of two or more thereof but is not limited thereto. The artificial intelligence model may, additionally or alternatively, include a software structure other than the hardware structure.

The memory 2130 may store various data used by at least one component (e.g., the processor 2120 or the sensor module 2176) of the electronic device 2101. The various data may include, for example, software (e.g., the program 2140) and input data or output data for a command related thereto. The memory 2130 may include the volatile memory 2132 or the non-volatile memory 2134.

The program 2140 may be stored in the memory 2130 as software, and may include, for example, an operating system (OS) 2142, middleware 2144, or an application 2146.

The input module 2150 may receive a command or data to be used by another component (e.g., the processor 2120) of the electronic device 2101, from the outside (e.g., a user) of the electronic device 2101. The input device 2150 may include, for example, a microphone, a mouse, a keyboard, a key (e.g., a button), or a digital pen (e.g., a stylus pen).

The sound output module 2155 may output sound signals to the outside of the electronic device 2101. The sound output module 2155 may include, for example, a speaker or a receiver. The speaker may be used for general purposes, such as playing multimedia or playing record. The receiver may be used for receiving incoming calls. According to an embodiment, the receiver may be implemented as separate from, or as part of the speaker.

The display module 2160 may visually provide information to the outside (e.g., a user) of the electronic device 2101. The display module 2160 may include, for example, a display, a hologram device, or a projector and control circuitry to control a corresponding one of the display, hologram device, and projector. According to an embodiment, the display module 2160 may include a touch sensor adapted to detect a touch, or a pressure sensor adapted to measure the intensity of force incurred by the touch.

The audio module 2170 may convert a sound into an electrical signal and vice versa. According to an embodiment, the audio module 2170 may obtain the sound via the input module 2150, or output the sound via the sound output module 2155 or a headphone of an external electronic device (e.g., an electronic device 2102) (e.g., a speaker or a headphone) directly or wirelessly coupled with the electronic device 2101.

The sensor module 2176 may detect an operational state (e.g., power or temperature) of the electronic device 2101 or an environmental state (e.g., a state of a user) external to the electronic device 2101, and then generate an electrical signal or data value corresponding to the detected state. According to an embodiment, the sensor module 2176 may include, for example, a gesture sensor, a gyro sensor, an atmospheric pressure sensor, a magnetic sensor, an acceleration sensor, a grip sensor, a proximity sensor, a color sensor, an infrared (IR) sensor, a biometric sensor, a temperature sensor, a humidity sensor, or an illuminance sensor.

The interface 2177 may support one or more specified protocols to be used for the electronic device 2101 to be coupled with the external electronic device (e.g., the electronic device 2102) directly (e.g., wiredly) or wirelessly. According to an embodiment, the interface 2177 may include, for example, a high definition multimedia interface (HDMI), a universal serial bus (USB) interface, a secure digital (SD) card interface, or an audio interface.

A connecting terminal 2178 may include a connector via which the electronic device 2101 may be physically connected with the external electronic device (e.g., the electronic device 2102). According to an embodiment, the connecting terminal 2178 may include, for example, a HDMI connector, a USB connector, a SD card connector, or an audio connector (e.g., a headphone connector).

The haptic module 2179 may convert an electrical signal into a mechanical stimulus (e.g., a vibration or a movement) or electrical stimulus which may be recognized by a user via his tactile sensation or kinesthetic sensation. According to an embodiment, the haptic module 2179 may include, for example, a motor, a piezoelectric element, or an electric stimulator.

The camera module 2180 may capture a still image or moving images. According to an embodiment, the camera module 2180 may include one or more lenses, image sensors, image signal processors, or flashes.

The power management module 2188 may manage power supplied to the electronic device 2101. According to one embodiment, the power management module 2188 may be implemented as at least part of, for example, a power management integrated circuit (PMIC).

The battery 2189 may supply power to at least one component of the electronic device 2101. According to an embodiment, the battery 2189 may include, for example, a primary cell which is not rechargeable, a secondary cell which is rechargeable, or a fuel cell.

The communication module 2190 may support establishing a direct (e.g., wired) communication channel or a wireless communication channel between the electronic device 2101 and the external electronic device (e.g., the electronic device 2102, the electronic device 2104, or the server 2108) and performing communication via the established communication channel. The communication module 2190 may include one or more communication processors that are operable independently from the processor 2120 (e.g., the application processor (AP)) and supports a direct (e.g., wired) communication or a wireless communication. According to an embodiment, the communication module 2190 may include a wireless communication module 2192 (e.g., a cellular communication module, a short-range wireless communication module, or a global navigation satellite system (GNSS) communication module) or a wired communication module 2194 (e.g., a local area network (LAN) communication module or a power line communication (PLC) module). A corresponding one of these communication modules may communicate with the external electronic device via the first network 2198 (e.g., a short-range communication network, such as Bluetooth™, wireless-fidelity (Wi-Fi) direct, or infrared data association (IrDA)) or the second network 2199 (e.g., a long-range communication network, such as a legacy cellular network, a 5G network, a next-generation communication network, the Internet, or a computer network (e.g., LAN or wide area network (WAN)). These various types of communication modules may be implemented as a single component (e.g., a single chip), or may be implemented as multi components (e.g., multi chips) separate from each other. The wireless communication module 2192 may identify and authenticate the electronic device 2101 in a communication network, such as the first network 2198 or the second network 2199, using subscriber information (e.g., international mobile subscriber identity (IMSI)) stored in the subscriber identification module 2196.

The wireless communication module 2192 may support a 5G network, after a 4G network, and next-generation communication technology, e.g., new radio (NR) access technology. The NR access technology may support enhanced mobile broadband (eMBB), massive machine type communications (mMTC), or ultra-reliable and low-latency communications (URLLC). The wireless communication module 2192 may support a high-frequency band (e.g., the mmWave band) to achieve, e.g., a high data transmission rate. The wireless communication module 2192 may support various technologies for securing performance on a high-frequency band, such as, e.g., beamforming, massive multiple-input and multiple-output (massive MIMO), full dimensional MIMO (FD-MIMO), array antenna, analog beam-forming, or large scale antenna. The wireless communication module 2192 may support various requirements specified in the electronic device 2101, an external electronic device (e.g., the electronic device 2104), or a network system (e.g., the second network 2199).

According to an embodiment, the wireless communication module 2192 may support a peak data rate (e.g., 20Gbps or more) for implementing eMBB, loss coverage (e.g., 164dB or less) for implementing mMTC, or U-plane latency (e.g., 0.5ms or less for each of downlink (DL) and uplink (UL), or a round trip of 1ms or less) for implementing URLLC.

The antenna module 2197 may transmit or receive a signal or power to or from the outside (e.g., the external electronic device) of the electronic device 2101. According to an embodiment, the antenna module 2197 may include a single antenna including a radiating element composed of a conductive material or a conductive pattern formed in or on a substrate (e.g., a printed circuit board (PCB)). According to an embodiment, the antenna module 2197 may include a plurality of antennas (e.g., array antennas). In such a case, at least one antenna appropriate for a communication scheme used in the communication network, such as the first network 2198 or the second network 2199, may be selected, for example, by the communication module 2190 (e.g., the wireless communication module 2192) from the plurality of antennas. The signal or the power may then be transmitted or received between the communication module 2190 and the external electronic device via the selected at least one antenna. According to an embodiment, another component (e.g., a radio frequency integrated circuit (RFIC)) other than the radiating element may be additionally formed as part of the antenna module 2197.

According to various embodiments, the antenna module 2197 may form an mmWave antenna module. According to an embodiment, the mmWave antenna module may include a printed circuit board, a RFIC disposed on a first surface (e.g., the bottom surface) of the printed circuit board, or adjacent to the first surface and capable of supporting a designated high-frequency band (e.g., the mmWave band), and a plurality of antennas (e.g., array antennas) disposed on a second surface (e.g., the top or a side surface) of the printed circuit board, or adjacent to the second surface and capable of transmitting or receiving signals of the designated high-frequency band.

At least some of the above-described components may be coupled mutually and communicate signals (e.g., commands or data) therebetween via an inter-peripheral communication scheme (e.g., a bus, general purpose input and output (GPIO), serial peripheral interface (SPI), or mobile industry processor interface (MIPI)).

According to an embodiment, commands or data may be transmitted or received between the electronic device 2101 and the external electronic device 2104 via the server 2108 coupled with the second network 2199. Each of the electronic devices 2102 or 2104 may be a device of a same type as, or a different type, from the electronic device 2101. According to an embodiment, all or some of operations to be executed at the electronic device 2101 may be executed at one or more of the external electronic devices 2102, 2104, or 2108. For example, if the electronic device 2101 should perform a function or a service automatically, or in response to a request from a user or another device, the electronic device 2101, instead of, or in addition to, executing the function or the service, may request the one or more external electronic devices to perform at least part of the function or the service. The one or more external electronic devices receiving the request may perform the at least part of the function or the service requested, or an additional function or an additional service related to the request, and transfer an outcome of the performing to the electronic device 2101. The electronic device 2101 may provide the outcome, with or without further processing of the outcome, as at least part of a reply to the request. To that end, a cloud computing, distributed computing, mobile edge computing (MEC), or client-server computing technology may be used, for example.

The electronic device 2101 may provide ultra low-latency services using, e.g., distributed computing or mobile edge computing. In another embodiment, the external electronic device 2104 may include an internet-of-things (IoT) device. The server 2108 may be an intelligent server using machine learning and/or a neural network. According to an embodiment, the external electronic device 2104 or the server 2108 may be included in the second network 2199. The electronic device 2101 may be applied to intelligent services (e.g., smart home, smart city, smart car, or healthcare) based on 5G communication technology or IoT-related technology.

FIG. 22 is a block diagram 2200 illustrating a camera module 2280 (e.g., the camera module 2180 of FIG. 21) according to various embodiments. Referring to FIG. 22, the camera module 2280 may include a lens assembly 2210 (e.g., the lens assembly 100 of FIG. 1, the lens assembly 200 of FIG. 5, the lens assembly 300 of FIG. 9, the lens assembly 400 of FIG. 13, and the lens assembly 500 of FIG. 17), a flash 2220, an image sensor 2230 (e.g., the image sensor 108 of FIG. 1, the image sensor 208 of FIG. 5, the image sensor 308 of FIG. 9, the image sensor 408 of FIG. 13, the image sensor 508 of FIG. 17, and the image sensor 608 of FIG. 21), an image stabilizer 2240, memory 2250 (e.g., buffer memory) (e.g., the memory 2130 of FIG. 21), or an image signal processor 2260. The lens assembly 2210 may collect light emitted or reflected from an object whose image is to be taken. The lens assembly 2210 may include one or more lenses. According to an embodiment, the camera module 2280 may include a plurality of lens assemblies 2210. In such a case, the camera module 2280 may form, for example, a dual camera, a 360-degree camera, or a spherical camera. Some of the plurality of lens assemblies 2210 may have the same lens attribute (e.g., view angle, focal length, auto-focusing, F-number (Fno), or optical zoom), or at least one lens assembly may have one or more lens attributes different from those of another lens assembly. The lens assembly 2210 may include, for example, a wide-angle lens or a telephoto lens.

The flash 2220 may emit light that is used to reinforce light reflected from an object. According to an embodiment, the flash 2220 may include one or more light emitting diodes (LEDs) (e.g., a red-green-blue (RGB) LED, a white LED, an infrared (IR) LED, or an ultraviolet (UV) LED) or a xenon lamp. The image sensor 2230 may obtain an image corresponding to an object by converting light emitted or reflected from the object and transmitted via the lens assembly 2210 into an electrical signal. According to an embodiment, the image sensor 2230 may include one selected from image sensors having different attributes, such as a RGB sensor, a black-and-white (BW) sensor, an IR sensor, or a UV sensor, a plurality of image sensors having the same attribute, or a plurality of image sensors having different attributes. Each image sensor included in the image sensor 2230 may be implemented using, for example, a charged coupled device (CCD) sensor or a complementary metal oxide semiconductor (CMOS) sensor.

The image stabilizer 2240 may move the image sensor 2230 or at least one lens included in the lens assembly 2210 in a particular direction, or control an operational attribute (e.g., adjust the read-out timing) of the image sensor 2230 in response to the movement of the camera module 2280 or the electronic device 2101 including the camera module 2280. This allows compensating for at least part of a negative effect (e.g., image blurring) by the movement on an image being captured. According to an embodiment, the image stabilizer 2240 may sense such a movement by the camera module 2280 or the electronic device 2101 using a gyro sensor (not shown) or an acceleration sensor (not shown) disposed inside or outside the camera module 2280. According to an embodiment, the image stabilizer 2240 may be implemented, for example, as an optical image stabilizer. The memory 2250 may store, at least temporarily, at least part of an image obtained via the image sensor 2230 for a subsequent image processing task. For example, if image capturing is delayed due to shutter lag or multiple images are quickly captured, a raw image obtained (e.g., a Bayer-patterned image, an image with high resolving power) may be stored in the memory 2250, and its corresponding copy image (e.g., an image with low resolving power) may be previewed via the display device 2160. Thereafter, if a specified condition is met (e.g., by a user's input or system command), at least part of the raw image stored in the memory 2250 may be obtained and processed, for example, by the image signal processor 2260. According to an embodiment, the memory 2250 may be configured as at least part of the memory 2130 or as a separate memory that is operated independently from the memory 2230.

The image signal processor 2260 may perform one or more image processing with respect to an image obtained via the image sensor 2230 or an image stored in the memory 2250. The one or more image processing may include, for example, depth map generation, three-dimensional (3D) modeling, panorama generation, feature point extraction, image synthesizing, or image compensation (e.g., noise reduction, resolving power adjustment, brightness adjustment, blurring, sharpening, or softening). Additionally or alternatively, the image signal processor 2260 may perform control (e.g., exposure time control or read-out timing control) with respect to at least one (e.g., the image sensor 2230) of the components included in the camera module 2280. An image processed by the image signal processor 2260 may be stored back in the memory 2250 for further processing, or may be provided to an external component (e.g., the memory 2130, the display device 2160, the electronic device 2102, the electronic device 2104, or the server 2108) outside the camera module 2280. According to an embodiment, the image signal processor 2260 may be configured as at least part of the processor 2120, or as a separate processor that is operated independently from the processor 2120. If the image signal processor 2260 is configured as a separate processor from the processor 2120, at least one image processed by the image signal processor 2260 may be displayed, by the processor 2220, via the display device 2260 as it is or after being further processed.

According to an embodiment, the electronic device 2101 may include a plurality of camera modules 2280 having different attributes or functions. In such a case, at least one of the plurality of camera modules 2280 may form, for example, a wide-angle camera and at least another of the plurality of camera modules 2280 may form a telephoto camera. Similarly, at least one of the plurality of camera modules 2280 may form, for example, a front camera and at least another of the plurality of camera modules 2280 may form a rear camera.

The electronic device according to various embodiments may be one of various types of electronic devices. The electronic devices may include, for example, a portable communication device (e.g., a smartphone), a computer device, a portable multimedia device, a portable medical device, a camera, a wearable device, or a home appliance. According to an embodiment of the disclosure, the electronic devices are not limited to those described above.

It should be appreciated that various embodiments of the present disclosure and the terms used therein are not intended to limit the technological features set forth herein to particular embodiments and include various changes, equivalents, or replacements for a corresponding embodiment. With regard to the description of the drawings, similar reference numerals may be used to refer to similar or related elements. It is to be understood that a singular form of a noun corresponding to an item may include one or more of the things, unless the relevant context clearly indicates otherwise. As used herein, each of such phrases as "A or B", "at least one of A and B", "at least one of A or B", "A, B, or C", "at least one of A, B, and C", and "at least one of A, B, or C", may include any one of, or all possible combinations of the items enumerated together in a corresponding one of the phrases. As used herein, such terms as "1st" and "2nd", or "first" and "second" may be used to simply distinguish a corresponding component from another, and does not limit the components in other aspect (e.g., importance or order). It is to be understood that if an element (e.g., a first element) is referred to, with or without the term "operatively" or "communicatively", as "coupled with", "coupled to", "connected with", or "connected to" another element (e.g., a second element), it means that the element may be coupled with the other element directly (e.g., wiredly), wirelessly, or via a third element.

As used in connection with various embodiments of the disclosure, the term "module" may include a unit implemented in hardware, software, or firmware, and may interchangeably be used with other terms, for example, logic, logic block, part, or circuitry. A module may be a single integral component, or a minimum unit or part thereof, adapted to perform one or more functions. For example, according to an embodiment, the module may be implemented in a form of an application-specific integrated circuit (ASIC).

Various embodiments as set forth herein may be implemented as software (e.g., the program 2140) including one or more instructions that are stored in a storage medium (e.g., internal memory 2136 or external memory 2138) that is readable by a machine (e.g., the electronic device 2101). For example, a processor (e.g., the processor 2120) of the machine (e.g., the electronic device 2101) may invoke at least one of the one or more instructions stored in the storage medium, and execute it, with or without using one or more other components under the control of the processor. This allows the machine to be operated to perform at least one function according to the at least one instruction invoked. The one or more instructions may include a code generated by a complier or a code executable by an interpreter. The machine-readable storage medium may be provided in the form of a non-transitory storage medium. Wherein, the term "non-transitory" simply means that the storage medium is a tangible device, and does not include a signal (e.g., an electromagnetic wave), but this term does not differentiate between where data is semi-permanently stored in the storage medium and where the data is temporarily stored in the storage medium.

According to an embodiment, a method according to various embodiments of the disclosure may be included and provided in a computer program product. The computer program product may be traded as a product between a seller and a buyer. The computer program product may be distributed in the form of a machine-readable storage medium (e.g., compact disc read only memory (CD-ROM)), or be distributed (e.g., downloaded or uploaded) online via an application store (e.g., PlayStore™), or between two user devices (e.g., smart phones) directly. If distributed online, at least part of the computer program product may be temporarily generated or at least temporarily stored in the machine-readable storage medium, such as memory of the manufacturer's server, a server of the application store, or a relay server.

According to various embodiments, each component (e.g., a module or a program) of the above-described components may include a single entity or multiple entities, and some of the multiple entities may be separately disposed in different components. According to various embodiments, one or more of the above-described components may be omitted, or one or more other components may be added. Alternatively or additionally, a plurality of components (e.g., modules or programs) may be integrated into a single component. In such a case, according to various embodiments, the integrated component may still perform one or more functions of each of the plurality of components in the same or similar manner as they are performed by a corresponding one of the plurality of components before the integration. According to various embodiments, operations performed by the module, the program, or another component may be carried out sequentially, in parallel, repeatedly, or heuristically, or one or more of the operations may be executed in a different order or omitted, or one or more other operations may be added.

According to embodiments of the disclosure, the electronic device 2101 may be provided, including the lens assembly 100, 200, 300, 400, or 500 in which a plurality of lenses are aligned along an optical axis direction from an object side toward an image side, the lens assembly including the first lens L1 having a positive refractive power, the second lens L2 having a negative refractive power, the third lens L3 having a positive refractive power, the fourth lens L4 having a negative refractive power, and the fifth lens L5 having a positive refractive power, and the image sensor IS including the imaging plane img on which an image is formed. The lens assembly may satisfy the following [Equation 1] and [Equation 2].

$$[Equation\ 1]$$
$$2.45 \leq \frac{vd_3 + vd_4}{vd_2} \leq 3.45$$

$$[Equation\ 2]$$
$$70\ degrees \leq FOV \leq 90\ degrees$$

(where Vd2 is an Abbe number of the second lens, Vd3 is an Abbe number of the third lens, and Vd4 is an Abbe number of the fourth lens in [Equation 1], and FoV is a field of view of an entire optical system in [Equation 2]).

According to an embodiment, the first lens may have a meniscus shape with a convex surface facing the object side, and the third lens may have a meniscus shape with a convex surface facing the image side.

According to an embodiment, the fourth lens may have a meniscus shape with a convex surface facing the object side, and the fifth lens may have a meniscus shape with a convex surface facing the object side.

According to an embodiment, the lens assembly may satisfy the following [Equation 3].

[Equation 3]

$$50 \leq Vd_1 \leq 60$$

(where Vd1 is an Abbe number of the first lens in [Equation 3]).

According to an embodiment, a surface of the first lens facing the image side may have an inflection shape in which a chief portion adjacent to an optical axis is concave toward the image side, and a marginal portion spaced apart from the optical axis by a predetermined distance is convex toward the image side.

According to an embodiment, the third lens may have a shape symmetrical to a shape of the first lens with respect to an imaginary plane located between the first lens and the third lens and perpendicular to the optical axis.

According to an embodiment, an aperture stop may be disposed between the second lens and the third lens.

According to an embodiment, the lens assembly satisfies the following [Equation 4].

[Equation 4]

$$1.65 \leq nd_2 \leq 1.75$$

(where nd2 is a refractive index of the second lens in [Equation 4]).

According to an embodiment, the third lens and the fourth lens may have lower refractive indexes than the second lens.

According to an embodiment, the lens assembly may satisfy the following [Equation 5].

[Equation 5]

$$1.55 \leq nd_3 \leq 1.65$$

(where nd3 is a refractive index of the third lens in [Equation 5]).

According to an embodiment, the lens assembly may satisfy the following [Equation 6].

[Equation 6]

$$1.55 \leq nd_4 \leq 1.65$$

(where nd4 is a refractive index of the fourth lens in [Equation 6]).

According to an embodiment, each of a surface of the fourth lens facing the object side and a surface of the fourth lens facing the image side may have an inflection shape in which a marginal portion is formed convex toward the image side.

According to an embodiment, each of a surface of the fifth lens facing the object side and a surface of the fifth lens facing the image side may have at least one inflection shape.

According to an embodiment, the lens assembly may satisfy the following [Equation 7].

[Equation 7]

$$1.2 \leq \frac{Oal}{IH} \leq 1.4$$

where Oal is a distance from the surface of the first lens facing the object side to the imaging plane of the image sensor, and IH is a maximum height of the imaging plane of the image sensor).

According to an embodiment, the lens assembly may satisfy the following [Equation 8].

[Equation 8]

$$0.25 \leq \frac{D_{1-3}}{Oal} \leq 0.4$$

(where $D_{1-3}$ is a distance from the surface of the first lens facing the object side to the surface of the third lens facing the image side, and Oal is the distance from the surface of the first lens facing the object side to the imaging plane of the image sensor).

According to an embodiment, the lens assembly may satisfy the following [Equation 9].

[Equation 9]

$$IH \leq 5.0$$

(where IH is the maximum height of the imaging plane of the image sensor).

According to embodiments of the disclosure, the electronic device 2101 may be provided, including the lens assembly 100, 200, 300, 400, or 500 in which a plurality of lenses are aligned along an optical axis direction from an object side toward an image side, the lens assembly including the first lens L1 having a positive refractive power in a meniscus shape with a convex surface toward the object side, the second lens L2 having a negative refractive power, the third lens L3 having a positive refractive power in a meniscus shape with a convex surface toward the image side, the fourth lens L4 having a negative refractive power in a meniscus shape with a convex surface toward the object side, and the fifth lens L5 having a positive refractive power in a meniscus shape with a convex surface toward the object side, and the image sensor IS including the imaging plane img on which an image is formed. The lens assembly may satisfy the following [Equation 1] and [Equation 2].

[Equation 1]

$$2.45 \leq \frac{vd_3 + vd_4}{vd_2} \leq 3.45$$

[Equation 2]

$$70 \leq FoV \leq 90$$

(where Vd2 is an Abbe number of the second lens, Vd3 is an Abbe number of the third lens, and Vd4 is an Abbe number of the fourth lens in [Equation 1], and FoV is a field of view of an entire optical system in [Equation 2]).

According to an embodiment, the lens assembly may satisfy the following [Equation 3].

[Equation 3]

$$50 \leq Vd_1 \leq 60$$

(where Vd1 is an Abbe number of the first lens in [Equation 3]).

According to an embodiment, the lens assembly satisfies the following [Equation 4], [Equation 5], and [Equation 6].

[Equation 4]

$$1.65 \leq nd_2 \leq 1.75$$

[Equation 5]

$$1.55 \leq nd_3 \leq 1.65$$

[Equation 6]

$$1.55 \leq nd_4 \leq 1.65$$

(where nd2 is a refractive index of the second lens in [Equation 4], nd3 is a refractive index of the third lens in [Equation 5], and nd4 is a refractive index of the fourth lens in [Equation 6]).

According to an embodiment, the lens assembly may satisfy the following [Equation 7].

[Equation 7]

$$1.2 \le \frac{Oal}{IH} \le 1.4$$

(where Oal is a distance from the surface of the first lens facing the object side to the imaging plane of the image sensor, and IH is a maximum height of the imaging plane of the image sensor).

According to an embodiment, the lens assembly may satisfy the following [Equation 8].

[Equation 8]

$$0.25 \le \frac{D_{1\text{-}3}}{Oal} \le 0.4$$

(where $D_{1\text{-}3}$ is a distance from the surface of the first lens facing the object side to the surface of the third lens facing the image side, and Oal is the distance from the surface of the first lens facing the object side to the imaging plane of the image sensor).

While specific embodiments have been described above in the detailed description of various embodiments of the disclosure, it is obvious to those skilled in the art that various modifications may be made without departing from the subject matter of the disclosure. For example, in a specific embodiment of the disclosure, the dimensions of a plurality of lenses may be appropriately set according to the structure, required specifications, and actual use environment of a lens assembly to be actually manufactured or an electronic device in which the lens assembly is to be mounted.

## Claims

1. An electronic device (2101) comprising:
   a lens assembly (100; 200; 300; 400; 500) in which a plurality of lenses are aligned along an optical axis direction from an object side toward an image side, the lens assembly including:

   a first lens (L1) having a positive refractive power;
   a second lens (L2) having a negative refractive power;
   a third lens (L3) having a positive refractive power;
   a fourth lens (L4) having a negative refractive power; and
   a fifth lens (L5) having a positive refractive power; and
   an image sensor (IS) including an imaging plane (img) on which an image is formed,
   wherein the lens assembly satisfies the following [Equation 1] and [Equation 2],

   [Equation 1]

   $$2.45 \le \frac{vd_3 + vd_4}{vd_2} \le 3.45$$

   [Equation 2]

   $$70 \text{ degrees} \le FOV \le 90 \text{ degrees}$$

   (where Vd2 is an Abbe number of the second lens, Vd3 is an Abbe number of the third lens, and Vd4 is an Abbe number of the fourth lens in [Equation 1], and FoV is a field of view of an entire optical system in [Equation 2]).

2. The electronic device of claim 1, wherein the first lens has a meniscus shape with a convex surface facing the object side, and
   wherein the third lens has a meniscus shape with a convex surface facing the image side.

3. The electronic device of claim 1 or 2, wherein the fourth lens has a meniscus shape with a convex surface facing the object side, and

wherein the fifth lens has a meniscus shape with a convex surface facing the object side.

4. The electronic device of any one of claims 1 to 3, wherein the lens assembly satisfies the following [Equation 3],

$$[\text{Equation 3}]$$

$$50 \leq Vd_1 \leq 60$$

(where Vd1 is an Abbe number of the first lens in [Equation 3]).

5. The electronic device of any one of claims 1 to 4, wherein a surface of the first lens facing the image side has an inflection shape in which a chief portion adjacent to an optical axis is concave toward the image side, and a marginal portion spaced apart from the optical axis by a predetermined distance is convex toward the image side.

6. The electronic device of any one of claims 1 to 5, wherein the third lens has a shape symmetrical to a shape of the first lens with respect to an imaginary plane located between the first lens and the third lens and perpendicular to the optical axis.

7. The electronic device of any one of claims 1 to 6, wherein an aperture stop is disposed between the second lens and the third lens.

8. The electronic device of any one of claims 1 to 7, wherein the lens assembly satisfies the following [Equation 4],

$$[\text{Equation 4}]$$

$$1.65 \leq nd_2 \leq 1.75$$

(where nd2 is a refractive index of the second lens in [Equation 4]).

9. The electronic device of claim 8, wherein the third lens and the fourth lens have lower refractive indexes than the second lens.

10. The electronic device of any one of claims 1 to 9, wherein the lens assembly satisfies the following [Equation 5] and [Equation 6],

$$[\text{Equation 5}]$$

$$1.55 \leq nd_3 \leq 1.65$$

$$[\text{Equation 6}]$$

$$1.55 \leq nd_4 \leq 1.65$$

(where nd3 is a refractive index of the third lens in [Equation 5], and nd4 is a refractive index of the fourth lens in [Equation 6]).

11. The electronic device of any one of claims 1 to 10, wherein each of a surface of the fourth lens facing the object side and a surface of the fourth lens facing the image side has an inflection shape in which a marginal portion is formed convex toward the image side.

12. The electronic device of any one of claims 1 to 11, wherein each of a surface of the fifth lens facing the object side and a surface of the fifth lens facing the image side has at least one inflection shape.

13. The electronic device of any one of claims 1 to 12, wherein the lens assembly satisfies the following [Equation 7],

[Equation 7]

$$1.2 \leq \frac{Oal}{IH} \leq 1.4$$

(where Oal is a distance from the surface of the first lens facing the object side to the imaging plane of the image sensor, and IH is a maximum height of the imaging plane of the image sensor).

14. The electronic device of any one of claims 1 to 13, wherein the lens assembly satisfies the following [Equation 8],

[Equation 8]

$$0.25 \leq \frac{D_{1\text{-}3}}{Oal} \leq 0.4$$

(where $D_{1\text{-}3}$ is a distance from the surface of the first lens facing the object side to the surface of the third lens facing the image side, and Oal is the distance from the surface of the first lens facing the object side to the imaging plane of the image sensor).

15. The electronic device of any one of claims 1 to 14, wherein the lens assembly satisfies the following [Equation 9],

[Equation 9]

$$IH \leq 5.0$$

(where IH is the maximum height of the imaging plane of the image sensor).

FIG. 1

LONGITUDINAL SPHERICAL ABER.

| | |
|---|---|
| —— | 656.2700 NM |
| ----- | 587.5600 NM |
| **——** | 546.0700 NM |
| ·········· | 486.1300 NM |
| —— | 435.8300 NM |

FOCUS (FOCUS:mm)

# FIG. 2

ASTIGMATIC FIELD CURVES
IMAGE HEIGHT (IH)

FIG. 3

DISTORTION
IMAGE HEIGHT (IH)

FIG. 4

FIG. 5

LONGITUDINAL SPHERICAL ABER.

| | 656.2700 NM |
| | 587.5600 NM |
| | 546.0700 NM |
| | 486.1300 NM |
| | 435.8300 NM |

FOCUS (FOCUS:mm)

FIG. 6

ASTIGMATIC FIELD CURVES
IMAGE HEIGHT (IH)

DISTORTION
IMAGE HEIGHT (IH)

FOCUS (FOCUS:mm)

DISTORTION RATIO:%

FIG. 7

FIG. 8

FIG. 9

FIG. 10

ASTIGMATIC FIELD CURVES

IMAGE HEIGHT (IH)

FOCUS (FOCUS:mm)

DISTORTION

IMAGE HEIGHT (IH)

DISTORTION RATIO:%

FIG. 11

FIG. 12

FIG. 13

LONGITUDINAL SPHERICAL ABER.

FIG. 14

ASTIGMATIC FIELD CURVES
IMAGE HEIGHT (IH)

DISTORTION
IMAGE HEIGHT (IH)

FOCUS (FOCUS:mm)

DISTORTION RATIO:%

FIG. 15

FIG. 16

FIG. 17

LONGITUDINAL SPHERICAL ABER.

FIG. 18

ASTIGMATIC FIELD CURVES
IMAGE HEIGHT (IH)

DISTORTION
IMAGE HEIGHT (IH)

FOCUS (FOCUS:mm)

DISTORTION RATIO:%

FIG. 19

FIG. 20

EP 4 671 842 A1

**ELECTRONIC DEVICE 2101**

**MEMORY** 2130 / 2132

**VOLATILE MEMORY**

**NON-VOLATILE MEMORY** 2134

**INTERNAL MEMORY** ~2136

**EXTERNAL MEMORY** ~2138

**INPUT MODULE** 2150

**SOUND OUTPUT MODULE** 2155

**DISPLAY MODULE** 2160

**BATTERY** 2189

**POWER MANAGEMENT MODULE** 2188

**PROCESSOR** 2120

**MAIN PROCESSOR** 2121

**AUXILIARY PROCESSOR** 2123

**COMMUNICATION MODULE** 2190

**WIRELESS COMMUNICATION MODULE** 2192

**WIRED COMMUNICATION MODULE** 2194

**SUBSCRIBER IDENTIFICATION MODULE** 2196

**ANTENNA MODULE** 2197

**AUDIO MODULE** 2170

**SENSOR MODULE** 2176

**INTERFACE** 2177

**CONNECTING TERMINAL** 2178

**HAPTIC MODULE** 2179

**CAMERA MODULE** 2180

**PROGRAM** 2140

**APPLICATION** 2146

**MIDDLEWARE** 2144

**OPERATING SYSTEM** 2142

2100

**SECOND NETWORK** 2199

**ELECTRONIC DEVICE** 2104

**FIRST NETWORK** 2198

**ELECTRONIC DEVICE** 2102

**SERVER** 2108

FIG. 21

2200

2280

## CAMERA MODULE

2220

FLASH

2210

2230

IMAGE SENSOR

LENS ASSEMBLY

2240

IMAGE STABILIZER

2250

MEMORY

2260

IMAGE SIGNAL PROCESSOR

# FIG. 22

## INTERNATIONAL SEARCH REPORT

| International application No. |
| --- |
| **PCT/KR2024/003356** |

**A. CLASSIFICATION OF SUBJECT MATTER**

G02B 13/00(2006.01)i; G02B 9/60(2006.01)i; H04N 23/55(2023.01)i; G03B 9/02(2006.01)i; G02B 3/00(2006.01)i

According to International Patent Classification (IPC) or to both national classification and IPC

**B. FIELDS SEARCHED**

Minimum documentation searched (classification system followed by classification symbols)

G02B 13/00(2006.01); G02B 13/18(2006.01); G02B 3/00(2006.01); G02B 9/60(2006.01)

Documentation searched other than minimum documentation to the extent that such documents are included in the fields searched

Korean utility models and applications for utility models: IPC as above
Japanese utility models and applications for utility models: IPC as above

Electronic data base consulted during the international search (name of data base and, where practicable, search terms used)

eKOMPASS (KIPO internal) & keywords: 제5 렌즈(fifth lens), 아베수(abbe number), 굴절률(refractive index), 굴절력 (refractive power), 거리(distance), 상높이(image height), 이미지 센서(image sensor), TTL

**C. DOCUMENTS CONSIDERED TO BE RELEVANT**

| Category* | Citation of document, with indication, where appropriate, of the relevant passages | Relevant to claim No. |
| --- | --- | --- |
| X | KR 10-2021-0127657 A (SAMSUNG ELECTRO-MECHANICS CO., LTD.) 22 October 2021 (2021-10-22)<br>See paragraphs [0001], [0032] and [0051]-[0071] and figures 1 and 4. | 1-2,4,7,12-15 |
| X | JP 2015-125212 A (SONY CORP.) 06 July 2015 (2015-07-06)<br>See paragraphs [0020] and [0040]-[0051] and figure 1. | 1,3,11 |
| X | KR 10-2016-0051185 A (SAMSUNG ELECTRO-MECHANICS CO., LTD.) 11 May 2016 (2016-05-11)<br>See paragraphs [0002] and [0104]-[0110] and figures 1 and 3. | 1,5 |
| A | JP 2019-113819 A (AAC TECHNOLOGIES PTE LTD.) 11 July 2019 (2019-07-11)<br>See paragraphs [0014] and [0030] and figure 1. | 1-15 |
| A | KR 10-2016-0112307 A (SAMSUNG ELECTRONICS CO., LTD.) 28 September 2016 (2016-09-28)<br>See paragraphs [0113]-[0120] and [0152] and figure 4. | 1-15 |

☐ Further documents are listed in the continuation of Box C.　　☑ See patent family annex.

| * | Special categories of cited documents: |
| --- | --- |
| "A" | document defining the general state of the art which is not considered to be of particular relevance |
| "D" | document cited by the applicant in the international application |
| "E" | earlier application or patent but published on or after the international filing date |
| "L" | document which may throw doubts on priority claim(s) or which is cited to establish the publication date of another citation or other special reason (as specified) |
| "O" | document referring to an oral disclosure, use, exhibition or other means |
| "P" | document published prior to the international filing date but later than the priority date claimed |

| "T" | later document published after the international filing date or priority date and not in conflict with the application but cited to understand the principle or theory underlying the invention |
| --- | --- |
| "X" | document of particular relevance; the claimed invention cannot be considered novel or cannot be considered to involve an inventive step when the document is taken alone |
| "Y" | document of particular relevance; the claimed invention cannot be considered to involve an inventive step when the document is combined with one or more other such documents, such combination being obvious to a person skilled in the art |
| "&" | document member of the same patent family |

| Date of the actual completion of the international search | Date of mailing of the international search report |
| --- | --- |
| **26 June 2024** | **27 June 2024** |

| Name and mailing address of the ISA/KR | Authorized officer |
| --- | --- |
| **Korean Intellectual Property Office**<br>**Government Complex-Daejeon Building 4, 189 Cheongsa-ro, Seo-gu, Daejeon 35208** | |
| Facsimile No. **+82-42-481-8578** | Telephone No. |

Form PCT/ISA/210 (second sheet) (July 2022)

## INTERNATIONAL SEARCH REPORT
### Information on patent family members

International application No.

**PCT/KR2024/003356**

| Patent document cited in search report | | | Publication date (day/month/year) | Patent family member(s) | | | Publication date (day/month/year) |
|---|---|---|---|---|---|---|---|
| KR | 10-2021-0127657 | A | 22 October 2021 | KR | 10-2022-0103890 | A | 25 July 2022 |
| | | | | KR | 10-2023-0056636 | A | 27 April 2023 |
| | | | | KR | 10-2423973 | B1 | 22 July 2022 |
| | | | | KR | 10-2522580 | B1 | 17 April 2023 |
| | | | | KR | 10-2632368 | B1 | 02 February 2024 |
| | | | | US | 2024-0012556 | A1 | 11 January 2024 |
| JP | 2015-125212 | A | 06 July 2015 | TW | 201527791 | A | 16 July 2015 |
| | | | | US | 2015-0185442 | A1 | 02 July 2015 |
| KR | 10-2016-0051185 | A | 11 May 2016 | CN | 106154504 | A | 23 November 2016 |
| | | | | CN | 106154504 | B | 16 August 2019 |
| | | | | CN | 110346913 | A | 18 October 2019 |
| | | | | CN | 110346913 | B | 14 December 2021 |
| | | | | KR | 10-1670136 | B1 | 27 October 2016 |
| | | | | TW | 201616175 | A | 01 May 2016 |
| | | | | TW | I630411 | B | 21 July 2018 |
| | | | | US | 2016-0124190 | A1 | 05 May 2016 |
| | | | | US | 9678308 | B2 | 13 June 2017 |
| JP | 2019-113819 | A | 11 July 2019 | CN | 108152922 | A | 12 June 2018 |
| | | | | CN | 108152922 | B | 09 June 2020 |
| | | | | JP | 6485796 | B1 | 20 March 2019 |
| | | | | US | 10606027 | B2 | 31 March 2020 |
| | | | | US | 2019-0196142 | A1 | 27 June 2019 |
| KR | 10-2016-0112307 | A | 28 September 2016 | CN | 105988191 | A | 05 October 2016 |
| | | | | CN | 105988191 | B | 25 August 2020 |
| | | | | KR | 10-2380230 | B1 | 30 March 2022 |
| | | | | US | 2016-0274334 | A1 | 22 September 2016 |
| | | | | US | 9823443 | B2 | 21 November 2017 |

Form PCT/ISA/210 (patent family annex) (July 2022)